# EUROPEAN PATENT APPLICATION

(11) **EP 0 583 985 A2**
(43) Date of publication of application: **23.02.1994**
(21) Application number: 93306542.7
(22) Date of filing: 19.08.1993
(51) Int. Cl.: G11B 5/60, G11B 21/21, B24D 3/28

(54) **Method of making magnetic recording head slider and the resulting slider**

(30) Priority: 19.08.1992 US 933431; 05.10.1992 US 957535
(71) Applicant: Komag, Inc., Milpitas California 95035 (US); DASTEK CORPORATION, San Jose, California 95119 (US)
(72) Inventor: Chen, Tu, Monte Sereno, California 95030 (US); Scott, Tracy L., Los Gatos, California 95032 (US); Yamashita, Tsutomo T., Milpitas, California 95035 (US); Lee, Kyou H., San Jose, California 95132 (US)
(74) Representative: Jones, Ian

(57) **Abstract**

This patent discloses a method of making a magnetic recording head slider having reduced friction and stiction and greatly improved contact start stop performance in a hard disk drive. It is found that conventional diamond particle abrasives used for machining, lapping and polishing for fabrication of sliders leave considerable surface and subsurface damage on the air bearing surface. The damage is microscopic and consists of mechanically weakened areas which can become dislodged and entrapped between the slider and the disk surface. The dislodged particles act as an abrasive and increase the friction between the slider and the disk, and lead to accelerated wear of the disk surface. In this invention, the mechanically weakened areas on the air bearing surface are selectively removed by a mechanical surface treatment process using particle abrasives other than diamond. The resulting slider surface has a high degree of mechanical integrity even when subjected to prolonged repeat impact motion against the disk surface in contact start stop operation. Consequently, the interface between the air bearing and disk surfaces is free of hard debris and therefore the friction at the interface can be drastically reduced from that of the untreated slider surface. The proposed surface treatment method also provides an additional advantage of further reducing head/media stiction through creation of micro-texture on the slider surface which results from mechanical treatment of the slider surface.

## Description

This invention relates to magnetic recording heads used in hard disk drives. More particularly, the present invention relates to the application of a unique mechanical surface treatment on the air bearing surface ("ABS") of a magnetic head slider which results in a surface which is more resistant to the generation of damaging debris at the slider/disk interface. Thus, friction and wear are reduced. In addition, stiction is further reduced due to the formation of a fine micro-texture on the slider surface.

In a hard disk drive, the magnetic recording head slider is designed to fly at close proximity to the disk surface on a cushion of air. As data density is increased, the flying height of the slider is reduced and frequency and likelihood of intermittent contact with the disk surface increases. The slider also undergoes sliding contact with the disk surface when the drive motor is turned on and when it is turned off. The repeated contact between the slider and the disk surface when the drive is turned on and off is often referred to as contact start stop ("CSS"). The CSS motion between the slider and disk surface is of great concern in the industry since it is generally the major source of failure in hard disk drives. It is recognized that friction must be minimized between the slider and the disk, and therefore it is common to apply a lubricant to the disk surface. Nevertheless, maintaining a low friction coefficient throughout the life of the drive has been difficult. This is because more and more demand has been placed on the slider-disk interface as the overall performance of the disk drive has increased.

One key requirement for higher linear recording density is lowering the flying height of the slider. This is often achieved by reducing the rail width and/or increasing the gram load on the suspension. In terms of physics, either approach would proportionally increase the normal force per unit area on the slider contact area and hence could increase the friction force. A higher data rate is obtained by higher rotational speed of the disk. This combined with the lowered flying height means that any intermittent contact that may occur between the slider and the disk surface can impart enormous energy to the interface. The damaging nature of increasing friction on the head-disk interface causes wear to occur on the disk surface. The initial manifestation of wear is an increase in stiction. Stiction is the tendency for the slider to stick to the disk surface when it is at rest. It is related to interatomic forces between two surfaces. Stiction is greatly aggravated by mating two very smooth surfaces together. Therefore, when two surfaces wear, the surfaces are smoothed out, the contact area increases, and stiction increases. Applying a liquid lubricant will reduce wear by lowering friction, but it can also adversely increase stiction. If the lubricant thickness is excessive, the lubricant tends to gather up around the interface between the slider and disk surface by meniscus force, and the stiction will increase dramatically. Stiction can cause severe damage to the slider and the disk when it is not controlled. The adhesive forces can be large enough to completely tear the slider from the suspension. If the drive motor has insufficient torque, stiction can cause the motor to stall. High friction and wear are synergistic, that is, high friction imparts energy to the surface, which causes wear, and the product of wear causes friction to be high. When friction is very high, the head cannot fly stably, which can cause the head to crash. When the wear is excessive, the magnetic layer can be worn and data is lost. However, the drive generally fails well before wear reaches the magnetic layer.

To protect the disk surface from impact of the slider in thin film hard media, a hard overcoat is usually applied, such as sputtered hydrogenated carbon as described in U.S. Patent 5,045,165, issued to Yamashita, or a ZrO₂ overcoat as described in U.S. Patent 4,929,500, issued to Yamashita et al. In addition, a liquid lubricant is applied over the overcoat to reduce friction and minimize wear as discussed by Yanagisawa in U.S. Patent 4,390,562. (The '165, '500 and '562 patents are incorporated herein by reference.) For particulate oxide hard disk media, it was suggested by Bandara et al. in U.S. Patent 4,692,832 that one method of reducing friction is to pass a slider over the disk surface at low speeds, e.g. 200 to 400 rpm for a short period in a low humidity environment (e.g. less than 1% relative humidity) to precondition the surface of the particulate media. It is claimed that the friction coefficient between the slider and the particulate disk surface is reduced, thereby increasing the lifetime of the disk storage system.

The slider is typically made out of hard ceramic materials which resist wear. A popular material is an aluminum oxide-titanium carbide (Al₂O₃-TiC) composite material as described in U.S. Patent 4,251,841, issued to Jacobs, incorporated herein by reference. Other materials such as NiZn and MnZn ferrite, calcium titanate and yttria-stabilized zirconia are also used. One important consideration for the slider is that it must have a high degree of mechanical integrity to withstand repeated impact against the disk surface during CSS. Any debris or particles which are dislodged from the slider ABS can become trapped between the slider ABS and the disk surface and act as an abrasive and increase friction, and hence cause rapid acceleration of wear to occur on the disk. Alternatively, asperities on the ABS can also cause accelerated wear.

Currently, most sliders are cut from large wafers using diamond dicing tools. The slider surface, including the ABS, is prepared by diamond particle abrasive lapping and polishing. Diamond, being the hardest material known, provides a very efficient cutting and lapping process for slider fabrication. The lapping technology is well developed in the industry as can be seen in "Surface Finishing Processes for Magnetic Recording Head Ceramics" by S. Chandrasekar et al., published in 1991 in Advanced Information Storage Systems, Vol. 1 by the American Society of Mechanical Engineers, pages 353 to 373, incorporated herein by reference. In order to obtain a smooth surface, successively smaller diamond particle abrasives are used until the roughness Ra is typically less than 1 nm. ("Ra" is a well-known measure of surface texture.) Although diamond particle abrasives can produce a very fine surface finish, it is found that there is always a significant amount of surface stress, and surface and sub-surface damage. The damaged material is mechanically weak, and during slider contact with the disk surface, debris is generated from the dislodging of weakened material which has a severe detrimental effect on the CSS performance. The debris causes friction to increase and wear to greatly accelerate. It is an object of this invention to eliminate this weakened material and provide a slider with superior friction characteristics.

Stiction can be reduced by reducing the contact area between the slider ABS and the disk. Typically, for thin film hard disk media, the disk surface is finely roughened or "textured" to reduce the contact area with the slider. For an aluminum disk coated with plated NiP, fine near-concentric grooves are put on the surface. Use of a concentric texture pattern on an aluminum/NiP substrate is described by Hedgcoth in U.S. Patent 4,735,840, incorporated herein by reference. Although Hedgcoth used texture to make the magnetic properties more uniform on the disk, it is known in the art that texture reduces stiction by reducing the contact area between the disk and the slider and providing some free volume for the lubricant. Other texturing techniques are also known, e.g. as taught by Kijima et al. in U.S. Patent 4,833,001, incorporated herein by reference, which describes a method for putting a fine roughness on a glass substrate.

Instead of texturing the disk surface, several techniques for texturing or roughening the slider ABS have been proposed to reduce the head media stiction. Ertingshausen et al. in U.S. Patent 4,549,238 claim that preferential removal of the TiC phase in Al₂O₃-TiC material by reactive ion etching in CF₄ to form small pits on the ABS improves CSS performance. A similar ion beam etching process to texture a slider surface has been proposed by Taguchi et al. in U.S. Patent 5,052,099. Alternatively, Arnoff et al. in U.S. Patent 5,079,657 show a method for texturing a slider ABS with various patterns using a photolithography technique. These proposed methods for roughening or texturing the ABS are neither economically practical nor technically sound for resolving the issue of stiction in a hard disk drive. The reasons are as follows. First, the techniques utilizing ion etching or photolithographic etching methods to create a texture on each individual ABS are cumbersome. Also, these techniques require numerous additional process steps and capital equipment to achieve the goal and hence could drastically increase the manufacturing cost of the slider. Further, aside from cost concerns, the proposed methods of chemical or ion etching may not only be ineffective in solving the fundamental cause of the stiction by not reducing the friction force between the ABS and media surface, but it is believed that they may even cause friction to increase and hence result in increased wear and stiction. For example, in the '238 patent, the proposed method of ion etching with a CF₄ plasma will remove a more mechanically strong TiC phase, leaving behind a mechanically weaker phase of Al₂O₃ which is heavily damaged by an earlier diamond lapping process. Consequently, this mechanically weakened Al₂O₃ phase will generate more debris and cause an increase in friction during CSS and therefore result in greater stiction. Another example is found in the '657 patent, which proposed to texture the ABS using a photolithography technique to create desired patterns to reduce stiction. However, it is believed that the chemical etch may create sharp corners in the etched pattern as well as leave behind mechanically weakened material by a prior diamond lapping step. Consequently, the weakened material or the sharp corners of the etched pattern are more likely to dislodge during CSS operation and result in a drastic increase in friction and hence lead to accelerated media wear. The net result of this likely scenario is that stiction will increase, despite the positive stiction reducing contribution of texturing the ABS. It will become apparent in the disclosure below that the fundamental problem of using chemical or physical etching methods, such as ion etching, is that there is no focused attempt to remove the mechanically weakened material from the ABS which was weakened by the surface and subsurface damage induced by diamond lapping or polishing of the ABS. Without removal of the weakened material from the ABS, it is believed that beneficial effects of stiction reduction as proposed for chemical or physical etching will not be realized.

The present invention addresses the method for removing damaged and mechanically weakened material from the slider ABS left by diamond lapping and polishing processes. If not removed, debris is inevitably generated during slider contact with the disk, and will cause friction to increase. Selective removal of mechanically weakened material on the ABS is achieved by treatment using a mechanical method with abrasive particles other than diamond. Several combinations of abrasive materials and particle sizes can be used. The resulting surface has excellent mechanical integrity and in addition has a unique micro-texture which reduces the contact surface area between the slider and the disk. Since the friction process which occurs during CSS is basically mechanical in nature, it is more appropriate to use a mechanical process to remove the damaged material and create a micro-texture as opposed to other methods.

Another object of this invention is to provide a cost effective method for achieving good surface finishing of a slider ABS.

The method described below is also applicable to heads used in flexible media, such as floppy disks or tape.

The present invention relates to the improved surface preparation of a magnetic head slider ABS. The slider surface prepared according to this invention has reduced friction and stiction, and greatly improved CSS performance.

In accordance with the present invention, a mechanical surface treatment method is provided for the slider ABS using an abrasive material having a hardness approximately equal to or preferably less than the hardness of the slider material. Typically, the abrasive material has a hardness greater than about 50% of the slider hardness on the Knoop hardness scale. The particle size of the abrasive is equal to or preferably less than the grain size of the slider. In the case where the slider is made from a composite material, the particle hardness should be comparable to or less than the softest phase in the matrix. This surface treatment process removes surface and sub-surface damage on the slider ABS which is left behind from the diamond lapping and polishing processes. Surface treatment also removes asperities and sharp corners around the damaged grains on the ABS. The resulting slider ABS has high mechanical integrity which causes minimal debris generation during impact loading of the slider against the disk, as would occur when the slider is flying or during CSS. Therefore, the slider/disk interface remains clean and friction remains low. As an added benefit, surface treatment creates a fine micro-texture on the slider surface because damage left behind by diamond lapping and polishing is non-uniform and hence the mechanically weakened material will be removed by this surface treatment method and will leave behind an uneven surface. The resulting uneven ABS creates a natural texture comprising mechanically strong material. Micro-texture reduces stiction by reducing contact area surface. Overall, the CSS performance is greatly improved over that of the prior art.

In one embodiment, the abrasive material is a ZrO₂ film sputtered on a disk having a surface roughness Ra of about 5 to 10 nm. Particle size of the abrasive is about 20 nm. The slider is made to rub against the disk surface while the disk rotates to remove the damaged layer from the slider surface.

In another embodiment, the surface treatment is performed by using a tape which supports abrasive particles of about 1 µm in diameter in a binder.

In another embodiment, the surface of a disk or a plate is coated with abrasive particles either by a binder, or coated by vacuum deposition, or by plasma spraying and the slider is rubbed or stroked or made to slide over the surface.

In another embodiment, the surface treatment is performed using a disk made from glass-ceramic material. The glass-ceramic comprises precipitated crystalline material, and can include amorphous glass material in an amount depending on the process conditions used to manufacture the glass-ceramic. When the glass-ceramic is mechanically lapped, protrusions are created due to the uneven lapping rate of the crystalline material and the amorphous glass material. The protruding crystalline material acts as an abrasive to mechanically treat the ABS and remove damaged material from the slider.

The surface treatment typically takes less than one hour, and preferably less than about 20 minutes, and in one embodiment, may be performed in about 10 minutes.

The invention is further described below, by way of example, with reference to the accompanying drawings, in which:

Figure 1 is a perspective view of a magnetic head slider.

Figure 2 is a graph illustrating stiction force vs. CSS cycle of an Al₂O₃-TiC slider made in accordance with the prior art.

Figure 3A illustrates the result of approximately 4,500 CSS cycles using an Al₂O₃-TiC slider similar to that of Fig. 2, but with an ABS surface treatment applied in accordance with the present invention. The CSS test was performed with a 130 mm carbon overcoated disk. The ABS treatment was done by sliding the slider over a concentrically textured aluminum/NiP disk coated with a 30 nm thick sputtered ZrO₂-Y₂O₃ film which served as the abrasive disk. The total distance traveled by the slider over the abrasive disk during the ABS treatment was 289 m.

Figure 3B illustrates the same CSS test as Fig. 3A, except using a slider where surface treatment was done by sliding the slider on a sputtered ZrO₂-Y₂O₃ film on a disk for a total of 578 m.

Figure 3C illustrates the same CSS test as Fig. 3A, except using a slider where surface treatment was done by sliding the slider on a sputtered ZrO₂-Y₂O₃ film on a disk for a total of 1445 m.

Figure 4A illustrates the same CSS test as Fig. 3A, except using a slider where surface treatment was done by sliding the slider on a sputtered ZrO₂-Y₂O₃ film on a disk for a total of 1445 m with the disk rotating at 500 rpm and the slider placed at a radius of 23 mm from the center of the disk.

Figure 4B illustrates the same CSS test as Fig. 3A, except using a slider where surface treatment was done by sliding the slider on a sputtered ZrO₂-Y₂O₃ film on a disk for a total of 1439 m with the disk rotating at 409 rpm and the slider placed at a radius of 28 mm from the center of the disk.

Figure 4C illustrates the same CSS test as Fig. 3A, except using a slider where surface treatment was done by sliding the slider on a sputtered ZrO₂-Y₂O₃ film on a disk for a total of 1435 m with the disk rotating at 346 rpm and the slider placed at a radius of 33 mm from the center of the disk.

Figure 4D illustrates the same CSS test as Fig. 3A, except using a slider where surface treatment was done by sliding the slider on a sputtered ZrO₂-Y₂O₃ film on a disk for a total of 723 m with the disk rotating at 500 rpm and the slider placed at a radius of 23 mm from the center of the disk.

Figure 5A illustrates the same CSS test as Fig. 3A, using a slider where the surface treatment was done by stroking the slider on a lapping plate loaded with 0.1 µm free Al₂O₃ abrasive particles for one minute.

Figure 5B illustrates the same CSS test as Fig. 3A, using a slider where surface treatment was done by stroking the slider on an abrasive tape with 1 µm Al₂O₃ particles. The slider was stroked over the tape for 1000 cycles with a stroke distance of 12.7 mm, for a total travel length of 12.7 m.

Figure 5C illustrates the same CSS test as Fig. 3A, except using a slider where surface treatment was done by stroking the slider on an abrasive tape with 1 µm Al₂O₃ particles. The slider was stroked over the tape for 2000 cycles with a stroke distance of 12.7 mm, for a total travel length of 25.4 m.

Figure 5D illustrates the same CSS test as Fig. 3A, except using a slider where surface treatment was done by stroking the slider on an abrasive tape with 1 µm Al₂O₃ particles. The slider was stroked over the tape for 4000 cycles with a stroke distance of 12.7 mm, for a total travel length of 50.8 m.

Figure 6A illustrates the same CSS test as Fig. 3A, except using a slider where the surface treatment was done by stroking the slider on an abrasive tape with 0.5 µm diameter diamond particles, using 100 stroke cycles with a stroke distance of 12.7 mm for a total travel length of 1.27 m.

Figure 6B illustrates the same CSS test as Fig. 3A, except using a slider where surface treatment was done by stroking the slider on an abrasive tape with 0.1 µm diamond particles, using 100 stroke cycles with a stroke distance of 12.7 mm for a total travel length of 1.27 m.

Figure 6C illustrates the same CSS test as Fig. 3A, and the same slider ABS treatment as in Fig. 6B, except that water and ethylene glycol was applied to the tape as a lubricant.

Figure 7A is a scanning electron microscope ("SEM") micrograph of an Al₂O₃-TiC slider ABS after diamond lapping but before surface treatment taken in secondary electron imaging mode.

Figure 7B is a SEM micrograph of the same slider ABS and the same area as shown in Fig. 7A after the ABS was subjected to the same surface treatment as in Fig. 3C. The SEM micrograph was taken in secondary electron imaging mode.

Figures 8 and 8A are schematic representations of a cross section of an Al₂O₃-TiC slider after diamond lapping.

Figure 8B is a schematic representation of a cross section of an Al₂O₃-TiC slider as shown in Fig. 1, undergoing CSS.

Figure 8C is a schematic representation of a cross section of an Al₂O₃-TiC slider as in Fig. 1, where surface treatment removed damaged material caused by diamond lapping.

Figure 9A is an atomic force microscopy ("AFM") micrograph of an Al₂O₃-TiC slider ABS surface subjected to standard diamond lapping and polishing but without the additional treatment step.

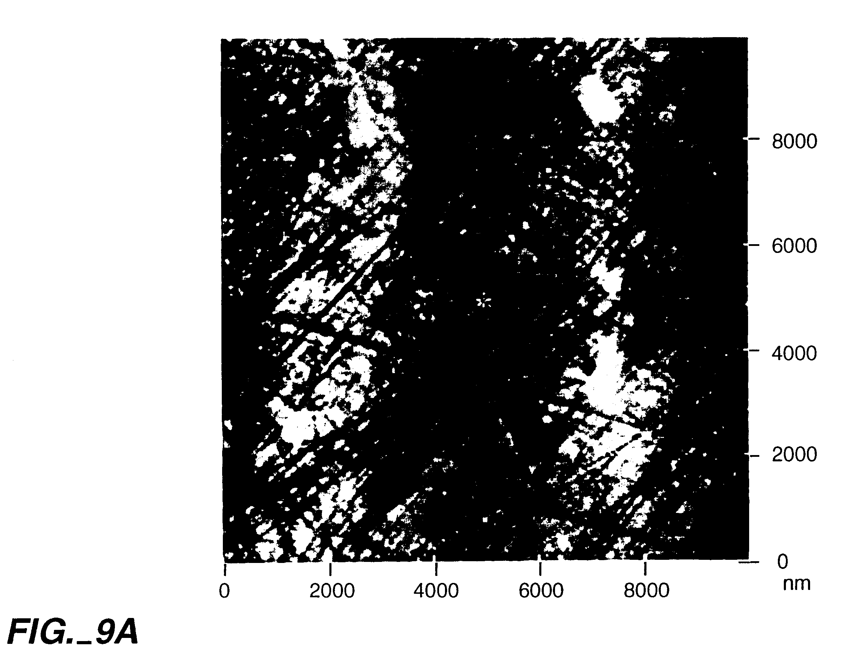

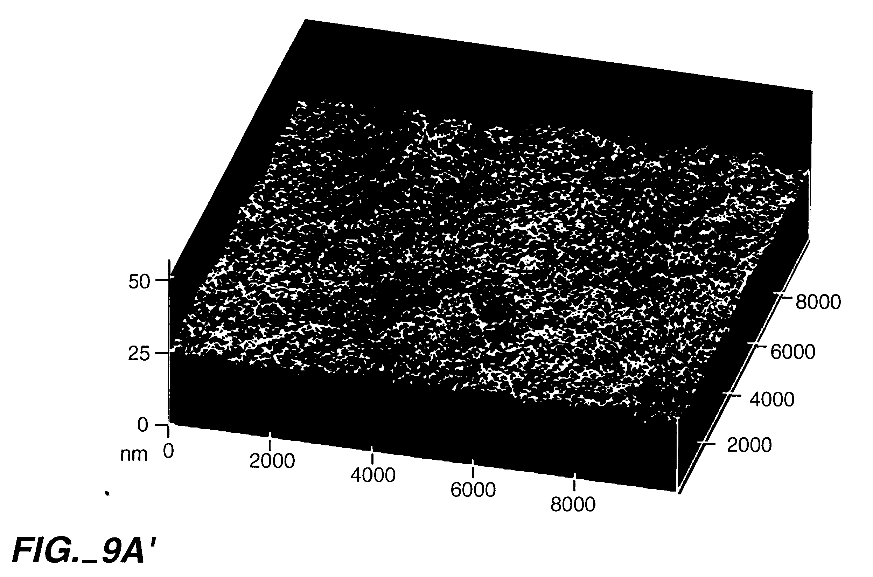

Figure 9A' illustrates the same ABS as Fig. 9A, replotted as a 3-dimensional line plot representation to better illustrate the surface topography of the ABS surface after standard diamond lapping and polishing.

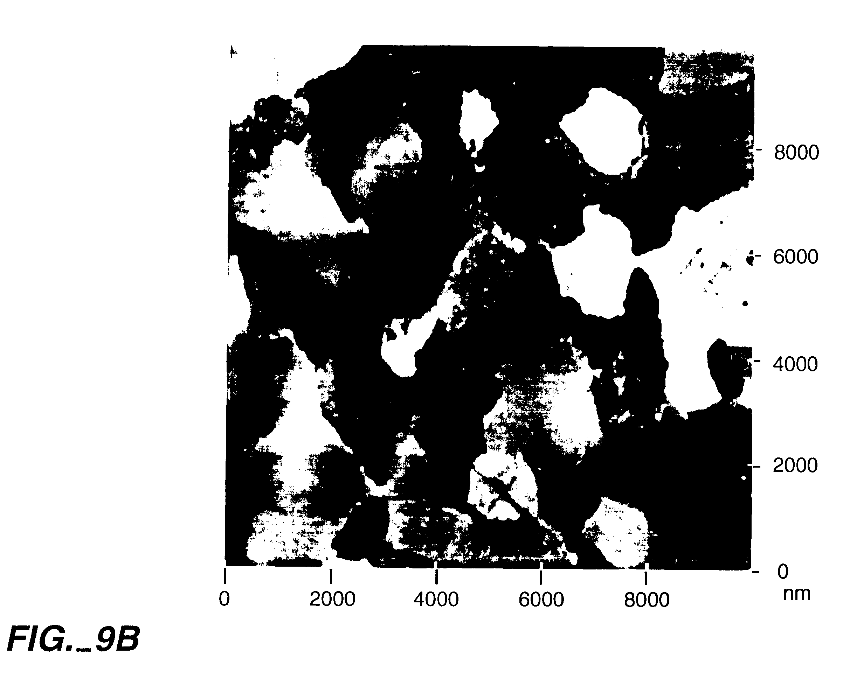

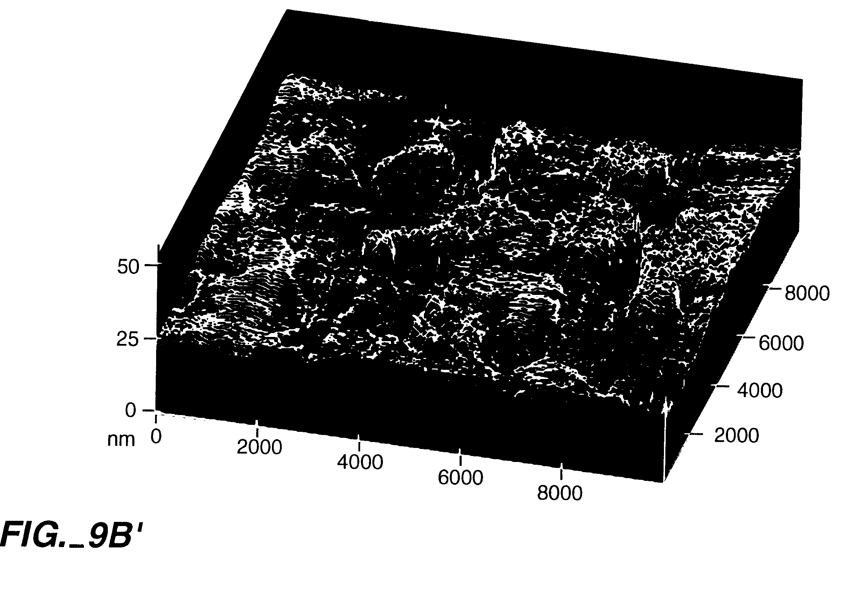

Figure 9B is an AFM micrograph of an Al₂O₃-TiC slider ABS after the treatment step consisting of sliding the slider over a ZrO₂-Y₂O₃ film sputtered on a disk for 1445 m.

Figure 9B' illustrates the same ABS as Fig. 9B, replotted as a 3-dimensional line plot representation to better illustrate the surface topography of the ABS surface after the conditioning step.

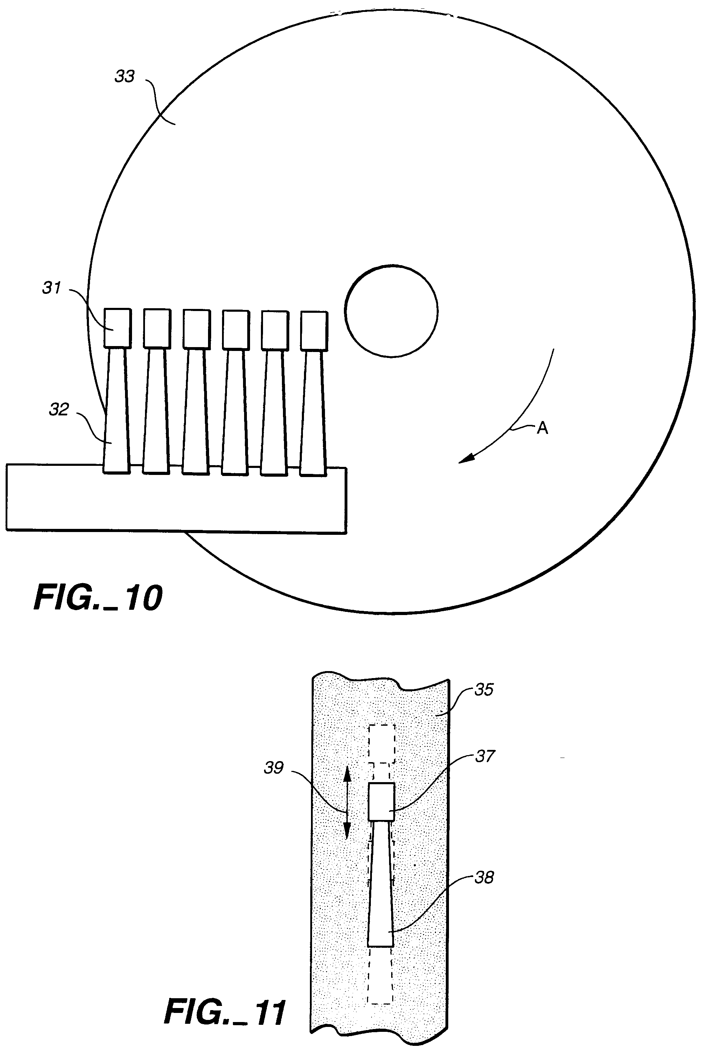

Figure 10 is a schematic representation of a method of treating the surface of the slider ABS by placing the slider over a rotating disk coated with an abrasive.

Figure 11 is a schematic representation of a method of treating the slider ABS by stroking the slider over a tape embedded with abrasive particles.

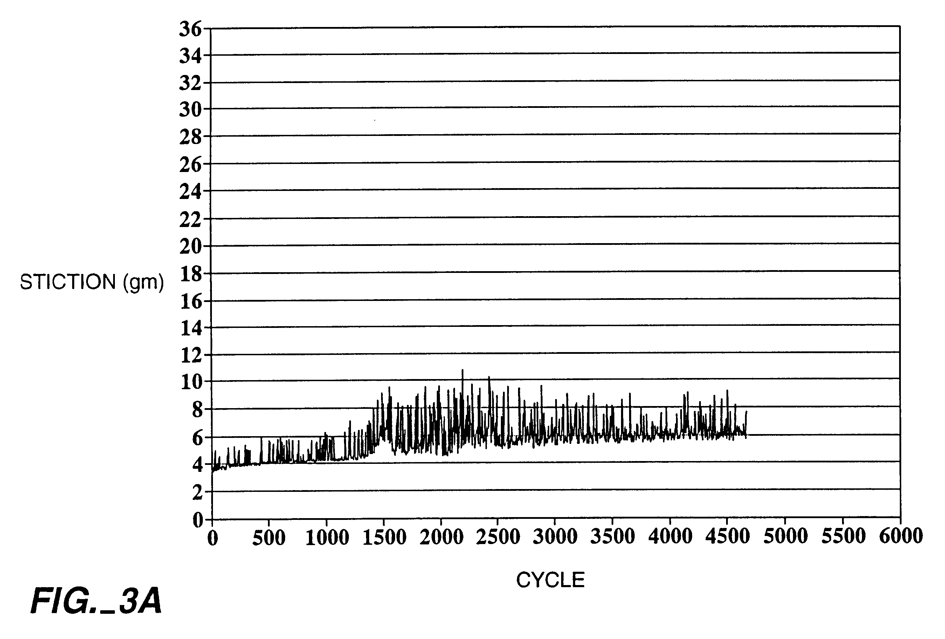

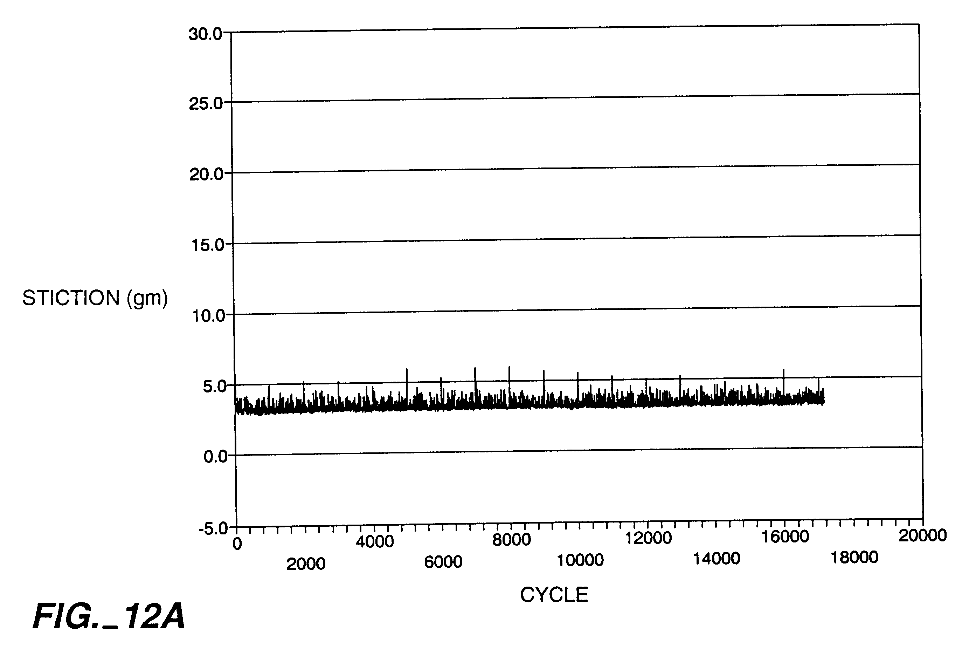

Figure 12A illustrates the same CSS test as Fig. 3A except using a slider where the surface treatment was done by sliding the slider on a glass-ceramic disk (Corning 9634 Chain Silicate Magnetic Disk Substrate produced by the Memory Products Division of Corning Glass Works) for a total of 718 m with the disk rotating at 500 rpm and the slider placed at a radius of 23 mm.

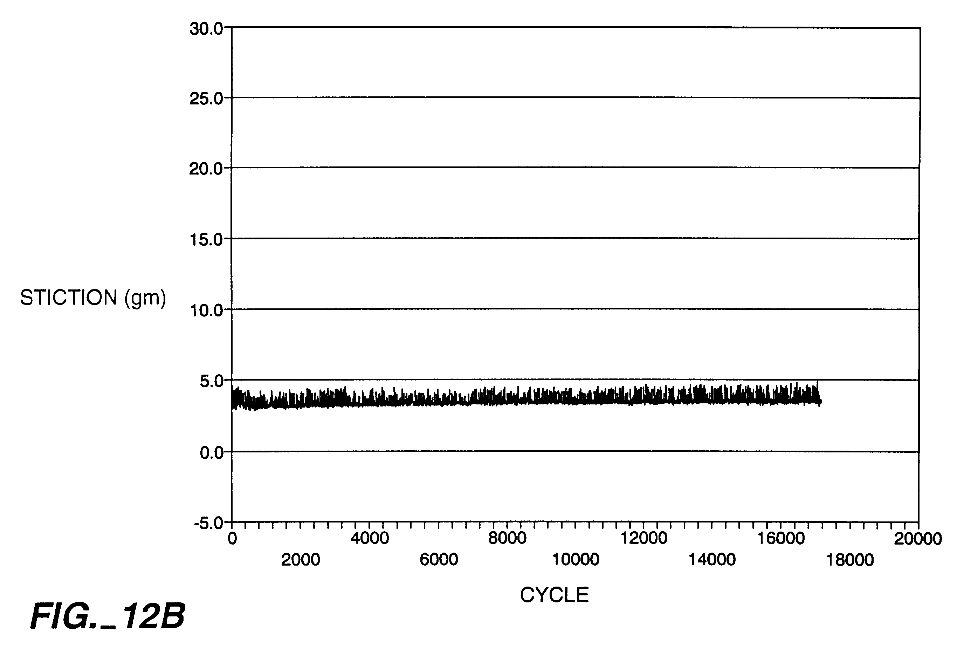

Figure 12B illustrates the same CSS test as well as the same surface treatment as Fig. 12A except this slider was treated for a total distance of 798 m with the disk rotating at 500 rpm and the slider placed at a radius of 25.4 mm.

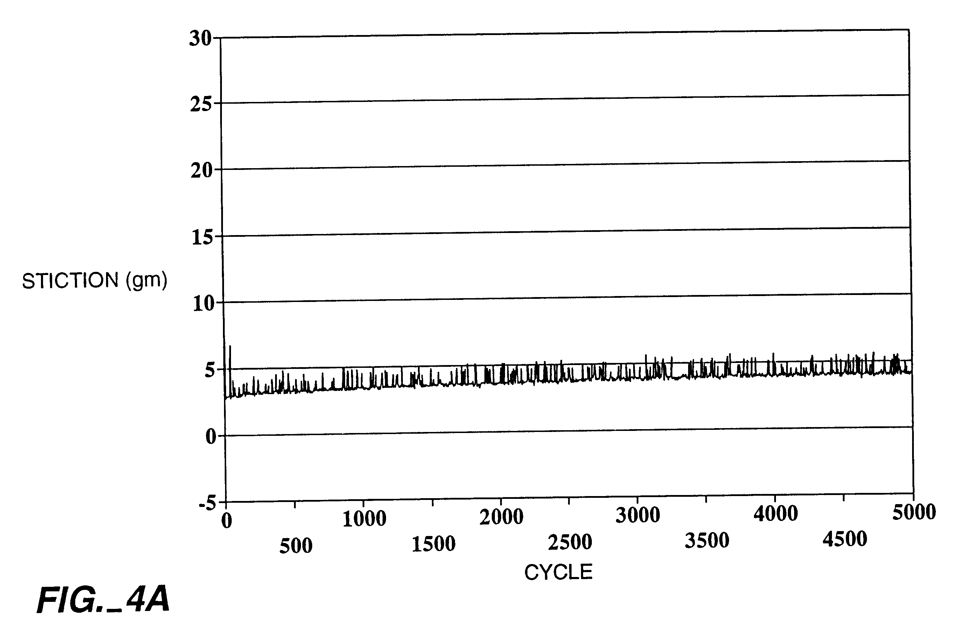

Figure 13A is an SEM micrograph of the surface of the sputtered ZrO₂ disk of the type used in the surface treatment of the slider of Fig. 3A to 3C and 4A to 4D.

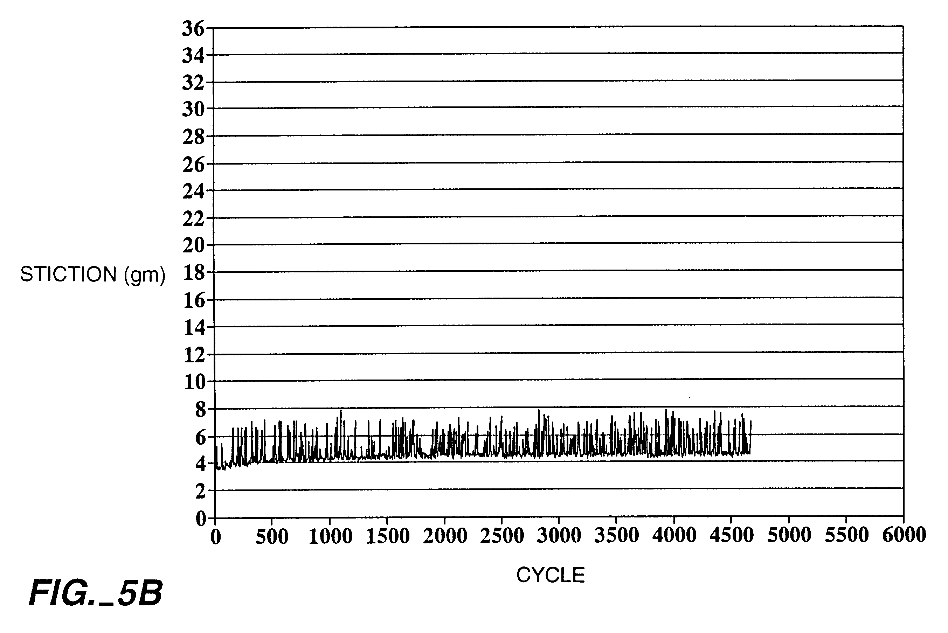

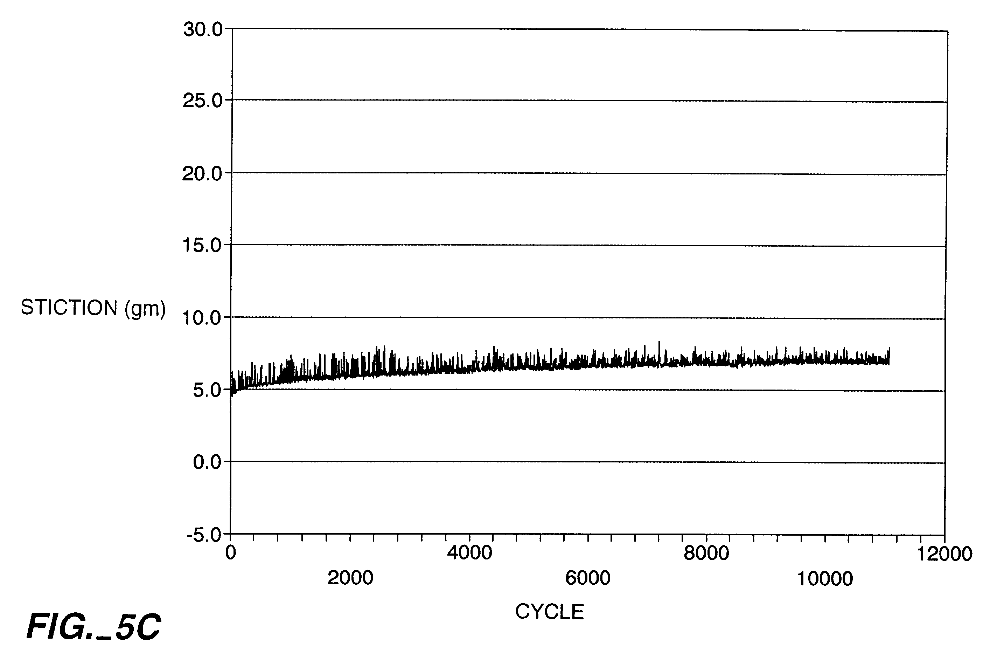

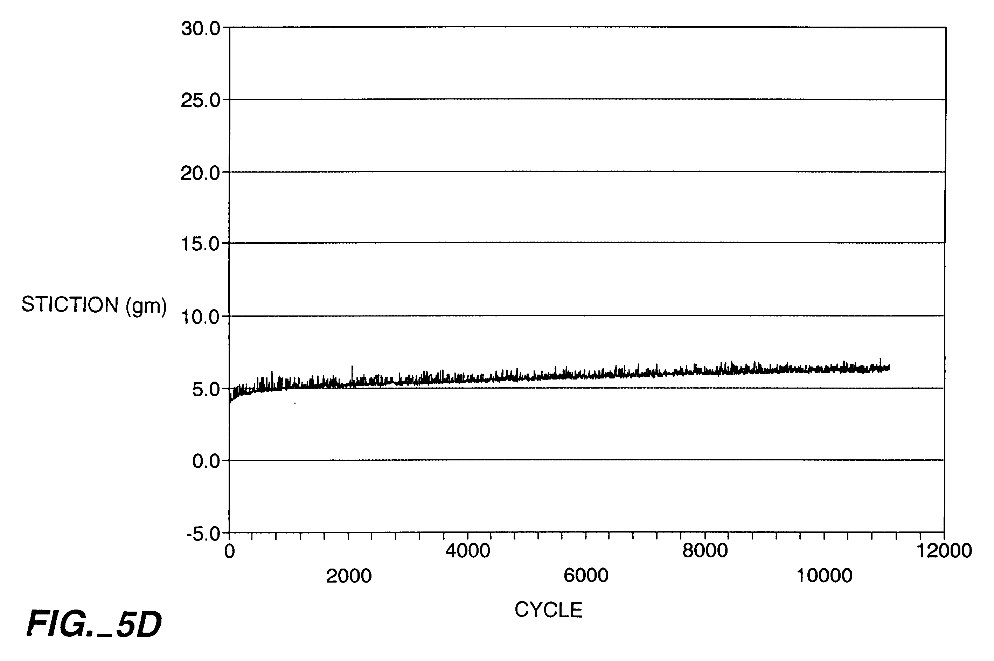

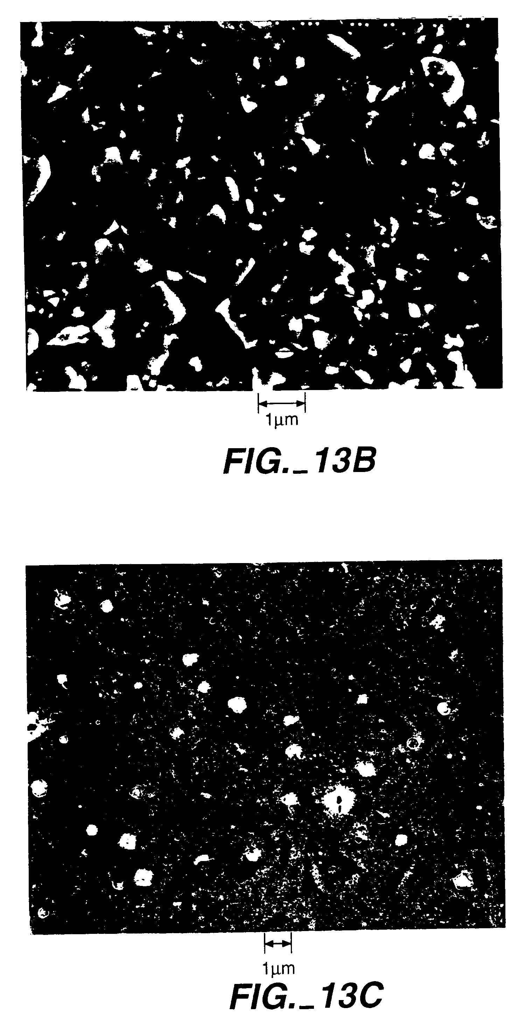

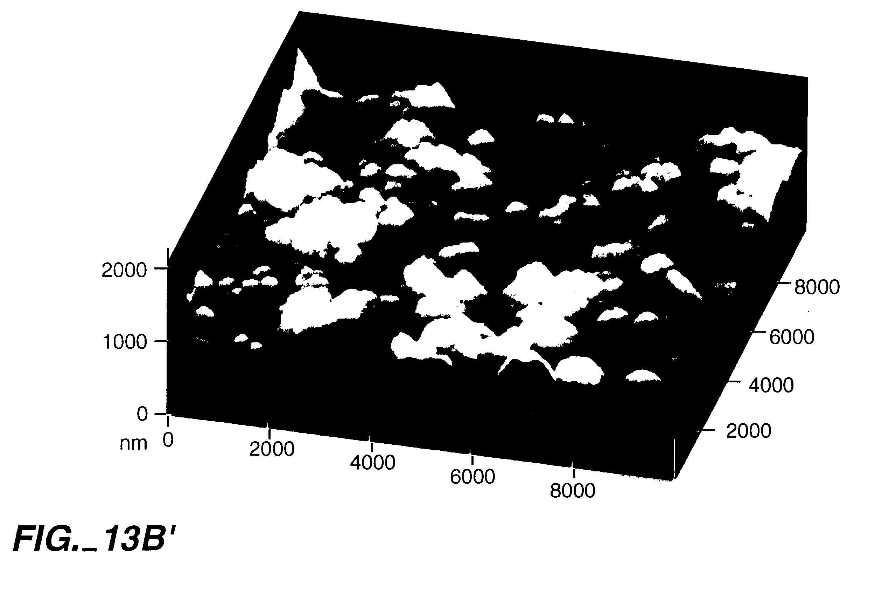

Figure 13B is an SEM micrograph of the surface of the abrasive tape with 1 µm Al₂O₃ particles of the type used in surface treatment of the sliders of Figs. 5B, 5C and 5D.

Figure 13B' is an AFM image illustrating the roughness of the abrasive tape of the type shown in Fig. 13B.

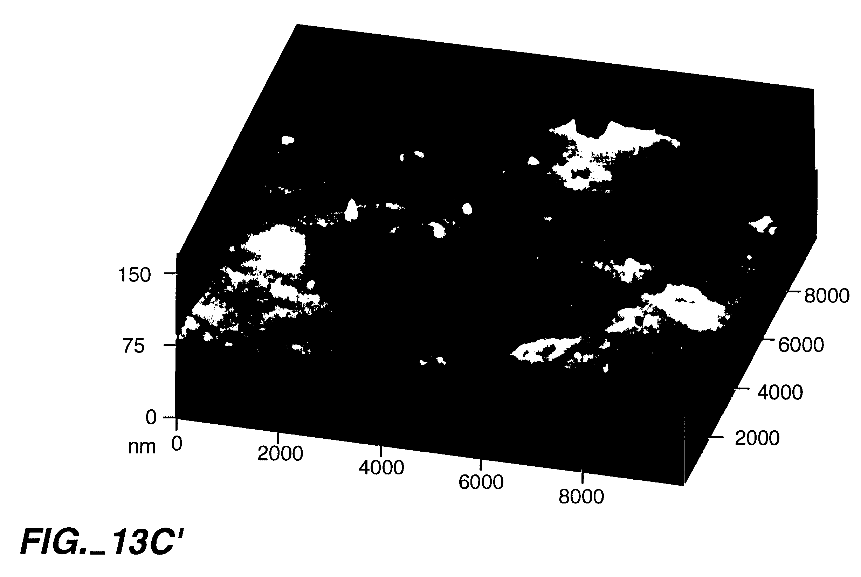

Figure 13C is an SEM micrograph of the surface of the glass-ceramic (canasite) disk of the type used in treatment of slider of Figs. 12A and 12B.

Figure 13C' is an AFM image illustrating the roughness of the glass-ceramic (canasite) disk used to perform the surface treatment in one embodiment of the invention.

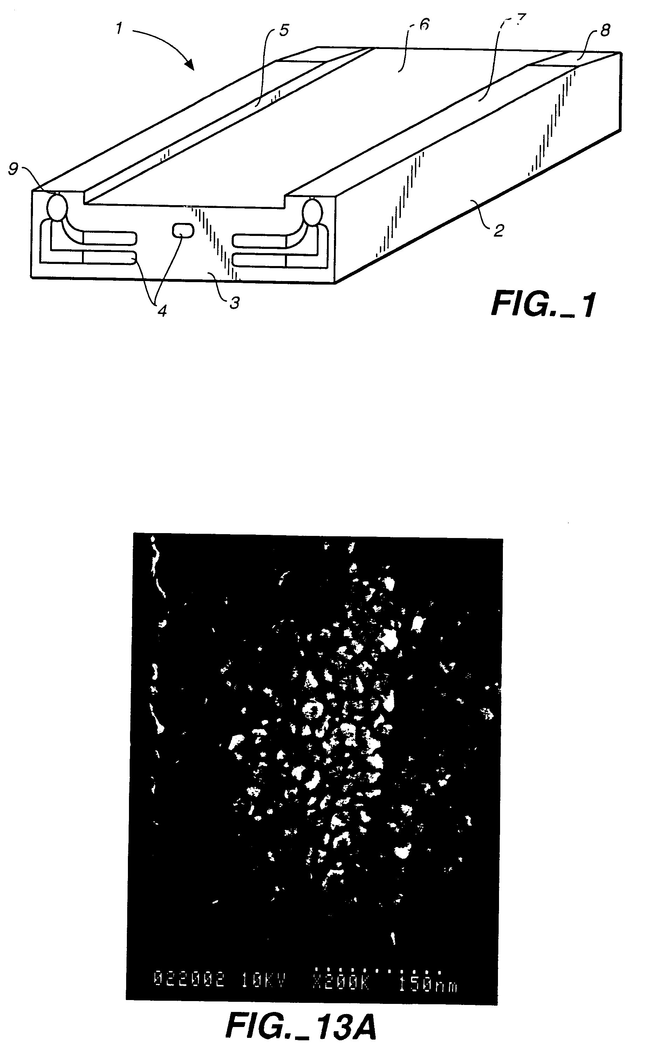

Figure 1 illustrates a typical two-rail magnetic head slider. This slider, designated by reference numeral 1, is generally rectangular in shape. Slider 1 comprises two portions, a slider body portion 2 and a surface 3 upon which a recording head 4 is placed.

Slider body portion 2, which constitutes the bulk of thin film head slider 1, is typically made of a composite ceramic material which is a mixture of Al₂O₃ and TiC. However, other suitably hard materials can be used. Body portion 2 comprises, in general, two parallel rails 5 on opposite sides of a recess face 6 of slider 1. A top surface 7 of each rail 5 constitutes an ABS of slider 1. At the end of ABS 7 opposite slider surface 3 is an air-bearing taper 8 which is slightly sloped with respect to the rail surface. Rails 5, ABS 7 and taper 8 are all important structural features which are very precisely shaped to enable slider 1 to "fly" at a pre-designed close distance from the magnetic disk surface.

Electromagnetic transducer head 4 of slider 1 is located on surface 3, and is encapsulated with a layer of sputtered Al₂O₃. Transducer 4 consists of a coil of wire and a magnetically soft permalloy film, which are defined by a photolithographic process. Transducer 4 includes poles 9 that terminate at their upper ends on surface 7 of rails 5. Poles 9 are made of a suitable ferromagnetic material such as NiFe. For slider 1 to function properly, it is important that the throat height, i.e. the height of pole 9 above a so-called "pole widening point" (not shown), be about 1000 nm.

In establishing the throat height of poles 9, a common practice is to polish slider 1 with rails 5 facing down over a diamond particle slurry or a plate with embedded diamond particle abrasives having a particle size in the range of about 0.5 to 2.0 µm in diameter. The diamond particle abrasives are typically supported on a tin plate, also known as a lapping plate. It is critical that the throat height of poles 9 be controlled precisely for proper functioning of transducer 4. Further, the geometries of rails 5 must be controlled very precisely to accurately define the flying characteristics of slider 1. Some of the geometric parameters which must be carefully controlled are taper, crown, camber and twist of the rail surface. Crown is the spherical or cylindrical curvature of the entire ABS 7. Typically, the crown is made convex (positive) over the surface of slider 1. Camber is a measure of the tilt between the two rails 5. Camber has much the same connotation as the tilt of tires with respect to the road in an automobile. Twist describes the distortion between rails 5 along their lengths. A more detailed description of these terms is provided in TOPO Purchased Options Manual, which is an instruction manual for the Wyko TOPO-3D Non-Contact Surface Profiler instrument, manufactured by Wyko Corp. of Tucson, AZ, incorporated by reference. These parameters have important consequences for the flying characteristics of slider 1 as well as the CSS performance, and therefore they are usually controlled to within a few nano-meters. The precise geometric requirements of ABS 7 place great demands on the lapping technique. Diamond particle abrasives are an ideal material for precise lapping and polishing of ABS 7 due to their extreme hardness and the speed at which the process can be accomplished. Typically the lapping and polishing processes are the most labor intensive and expensive steps during manufacturing of sliders. The surface can always be made smoother with a greater number of steps, but increasing the number of steps not only adds to the manufacturing cost but also leads to more variability in the geometry of ABS 7. Therefore, it is important that the process be done efficiently with a minimal number of steps.

Conventional wisdom in a lapping and polishing operation is to first start with a fairly large abrasive particle size to quickly bring the surface close to a desired shape. (As used herein, the terms "lapping" and "polishing" are synonymous.) Then, one successively steps down to smaller and smaller particle sizes so that at each step, the damage and surface roughness left behind by the previous particle size is removed. In theory, the more steps that are taken should result in a finer and smoother surface. This is illustrated by Vander Voort, in Metallography, Principles and Practice, published by McGraw Hill Book Company in 1984, incorporated herein by reference. In a manufacturing process, however, the number of steps are minimized to keep costs low and reduce the variability in the ABS geometry from slider to slider. In a typical slider ABS polishing operation, the final step is accomplished using diamond particle abrasives in sub-micron sizes and the surface is extremely well-polished with an Ra in the range of only a few tenths of a nano-meter. Diamond, having a Knoop hardness in the range of 7000 to 9000 in comparison to about 2000 to 3000 (based on bulk material properties) for the Al₂O₃-TiC composite, offers fast cutting action, and the desired smoothness and shape can be reached with only a small number of steps.

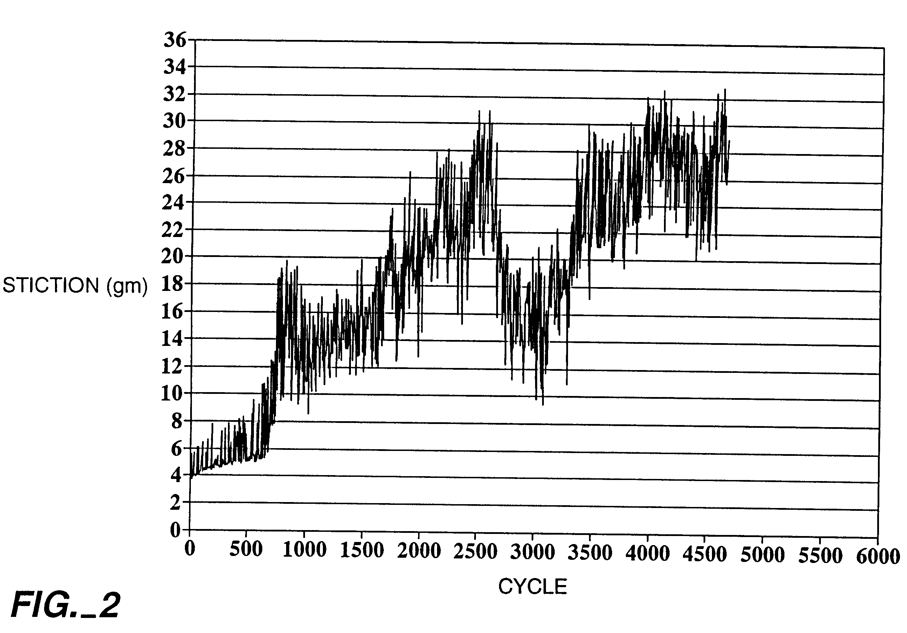

One key requirement of a disk drive is that it should sustain large numbers of CSS cycles without a large increase in stiction. Figure 2 shows a typical CSS test result, performed on a 130 mm diameter thin film recording media with a sputtered carbon overcoat and lubricated with about 2 to 3 nm of perfluoropolyether lubricant. The test was performed by placing an Al₂O₃-TiC slider at a radius of 33 mm from the center of the disk. The slider was prepared by conventional diamond particle polishing as previously described. The slider was 70% Al₂O₃ and 30% TiC by weight. Slider dimensions were those for the micro-slider, i.e. 2.1 x 2.8 mm, by 0.610 mm thick. (The term "micro-slider" is known in the art as being a type of slider.) The gram load on the slider was 11 grams, provided by the suspension. Figure 2 shows stiction values in grams force vs. the number of CSS cycles. The disk was started from rest and spun up to 3600 rpm. The slider flew for several seconds, and then the motor was turned off and the slider was allowed to coast down to a stop. The spin-up took about 3 seconds, and spin-down took about 9 seconds. The process was repeated many times. To reach 5000 cycles, the test typically takes several hours. Stiction is the force which must be overcome to initially dislodge the slider from the disk surface from the resting position. The general increase in the slope in Figure 2 indicates an increase in friction due to wear. The jaggedness of the curve represents widely varying stiction values from cycle to cycle. The criteria for determining whether a disk and slider perform acceptably during CSS tests depends on a number of factors, including the type of drive being used. For example, some drives use more powerful motors which can tolerate a greater load than others. A typical requirement is that the stiction coefficient, defined as the ratio of stiction value to normal load, is less than 1.0. By this definition, the above test would be a failure if the stiction value increased beyond 11 grams. The passing criteria for the above test is that stiction should not increase beyond 20 grams at any time up to 20,000 CSS cycles. Since the stiction in Fig. 2 increased to more than 30 grams in less than 5000 cycles, it is clearly unacceptable.

It is believed that the poor CSS performance for the slider of Fig. 2, prepared in accordance with the prior art, is due to weakened material dislodging from the part of the slider damaged during diamond lapping. The dislodged particles become entrapped between the ABS and disk surface and cause accelerated abrasive wear to occur. Although the slider ABS was nominally polished to a very high smoothness with diamond lapping, it is believed that there is considerable surface and sub-surface damage on the slider ABS. In addition, as a result of the damage, the ABS may contain asperities which protrude from the slider surface and sharp corners may be present around the exposed grains of Al₂O₃ and TiC. Sub-surface damage is a common feature of most polishing processes. The depth of the damage depends upon the type and size of the polishing particles used and the material being polished. In a typical metallographic surface preparation, surface damage is reduced by using successively smaller abrasive particles or by using chemical or chemo-mechanical polishing. Chemical or chemo-mechanical polishing is probably unsuitable for a slider ABS because the chemical may attack the sensitive permalloy film in used in the head transducer. In addition, the ABS geometry would be difficult to control using a chemical polishing technique. It is emphasized that diamond lapping is still a very effective means of shaping the slider ABS to a desired geometry.

In accordance with our invention, preferential removal of the damaged areas in the slider ABS slows abrasive wear between the ABS and the media, resulting in an ABS which has significantly reduced stiction compared to prior art sliders. This removal may be achieved by a mechanical treatment (also referred to below as surface mechanical treatment) using any of a number of methods. A distinction should be made between "polishing" and "surface mechanical treatment." Polishing in the context of this patent refers to smoothing a surface to achieve the lowest possible roughness. Surface mechanical treatment refers to preferential removal of damaged material at the slider surface, preferential removal or rounding of sharp corners where the damaged particles have been removed, and removal of surface asperities. The resulting slider surface has greater mechanical integrity under impact loading during CSS. Of importance, unlike polishing, the surface mechanical treatment does not necessarily lead to a smooth surface with low roughness. In fact, the surface mechanical treatment applied to an Al₂O₃-TiC slider actually increases roughness by producing a micro-textured surface.

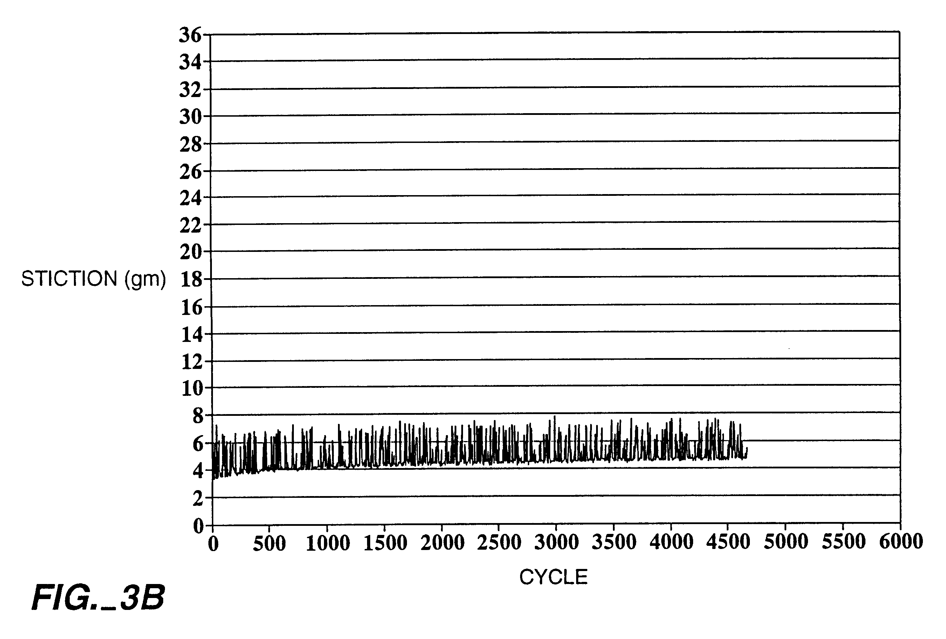

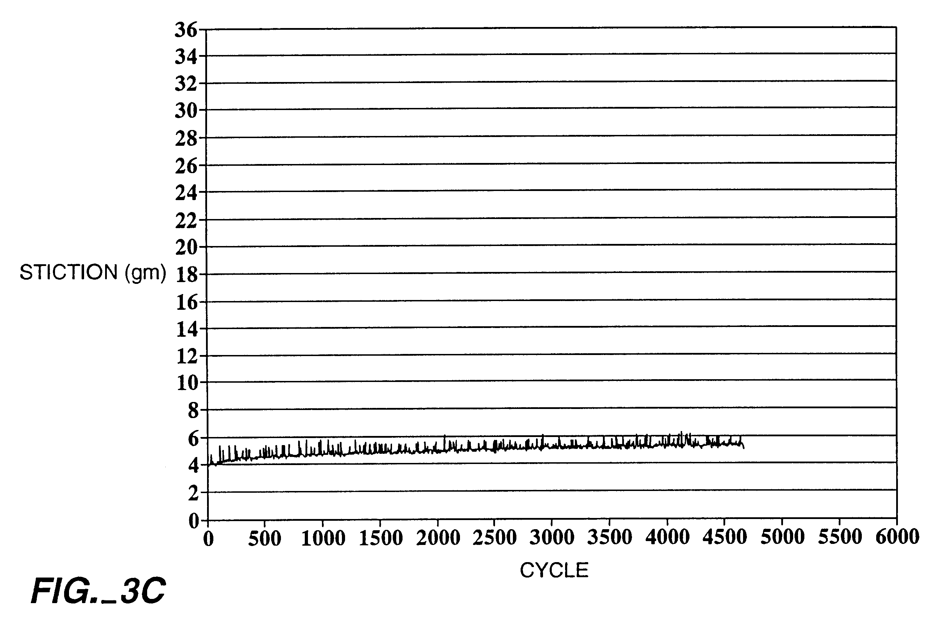

In Figures 3A to 3C, CSS testing was performed in exactly the same manner as Fig. 2. Results shown in Figs. 3A to 3C are for sliders which underwent surface mechanical treatment after diamond polishing. The treatment step consisted of sliding the slider over an abrasive disk surface comprising a 30 nm thick ZrO₂-Y₂O₃ film sputtered on the surface of a disk 95 mm in diameter. The Y₂O₃ content of the film was 5% by weight, and the ZrO₂ content was 95% by weight. The grain size was on the order of about 20 nm. The abrasive disk was not lubricated. The abrasive disk was near circumferentially textured with a roughness Ra on the order of about 5 nm. At the inside radius of about 23 mm, the texture pattern had a crossing angle of about 38 degrees. Toward the outside radius, the crossing angle was gradually reduced so that at a 33 mm radius, the crossing angle was 23 degrees. The slider was placed at a radius of 23 mm from the center of the abrasive disk. For the test shown in Fig. 3A, the abrasive disk was rotated at 100 rpm for 20 minutes for a total sliding distance of 289 m. For the test shown in Fig. 3B, the abrasive disk was rotated at 200 rpm for 20 minutes for a total sliding distance of 578 m. For the test shown in Fig. 3C, the abrasive disk was rotated at 500 rpm for 20 minutes, for a total sliding distance of 1445 m. For the surface treatment for Figs. 3A to 3C, an 11 gram normal force was applied to the slider. After treatment, the sliders were cleaned carefully with methanol and wiped. It can be seen that in all cases, the CSS performance improved significantly, with Fig. 3C having the longest sliding distance showing the best results. In Fig. 3A, stiction remained below 10 grams, even after 4700 cycles. In Fig. 3B, stiction remained below 8 grams, even after 4500 cycles, whereas in Fig. 3C, stiction remained below 6 grams, even after 4500 cycles. These results were achieved after a relatively short treatment time, which is an advantage during manufacturing.

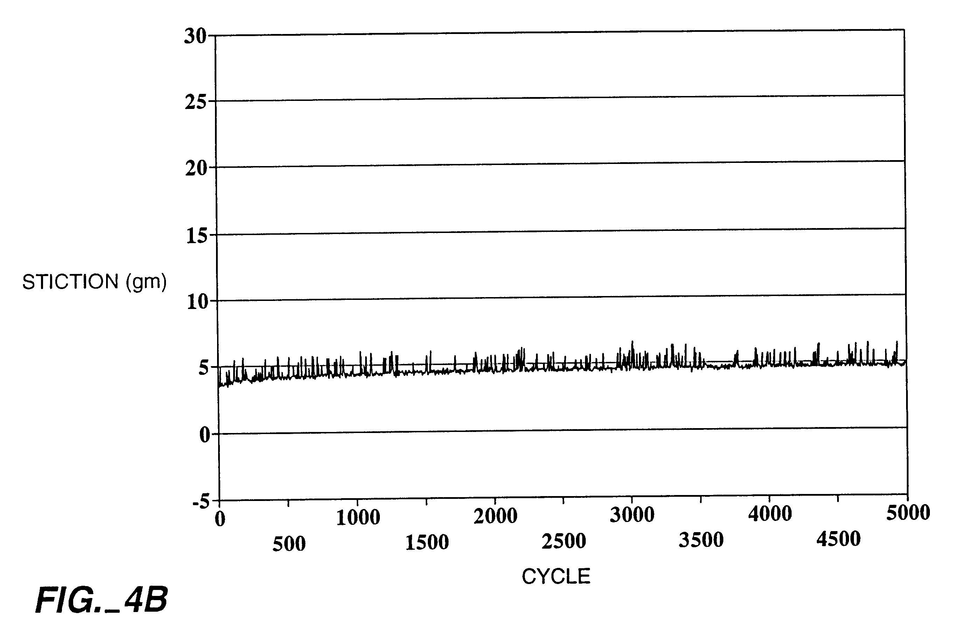

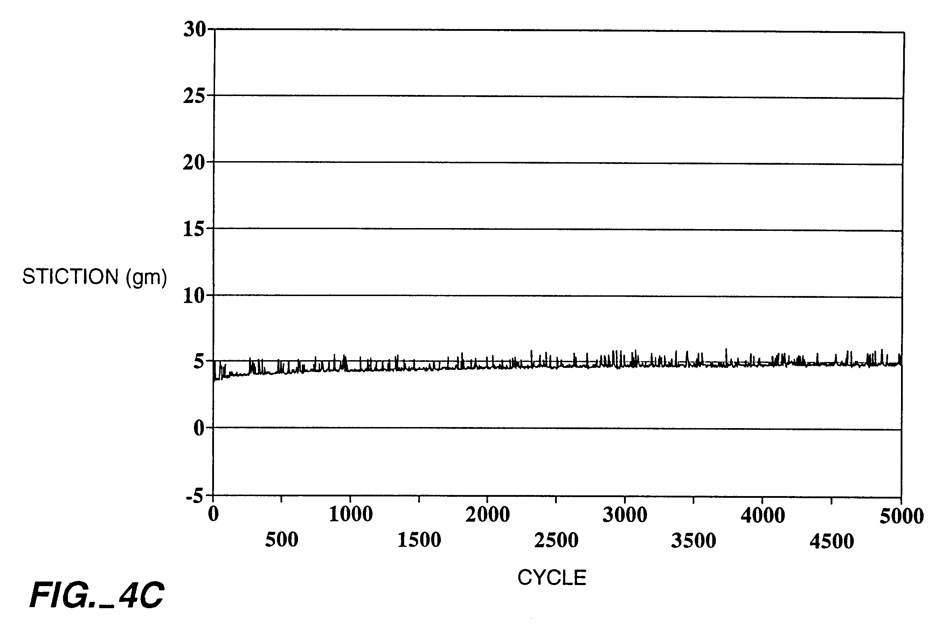

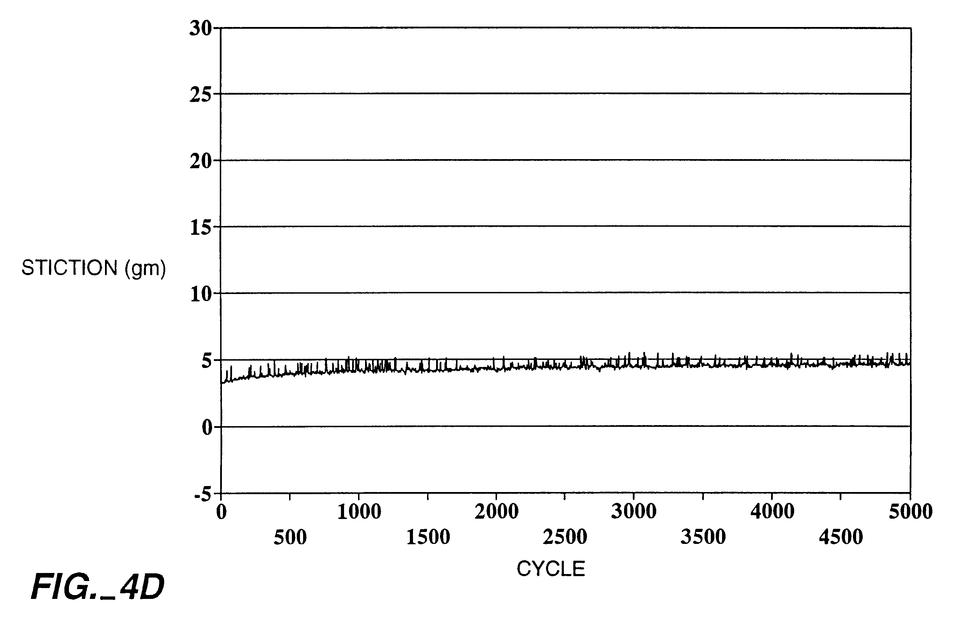

In Figures 4A to 4C, the CSS conditions were the same as described in Fig. 2, and the treatment operation was performed by placing the slider at different radii of the abrasive unlubricated disk coated with sputtered ZrO₂-Y₂O₃. Rotation speed was changed for each different radius to maintain approximately the same linear speed of the slider. The normal force was 11 grams. The slider in Fig. 4A was placed at a radius of 23 mm, and the abrasive disk was rotated at 500 rpm. In Fig. 4B, the slider was placed at a radius of 28 mm and the abrasive disk was rotated at 409 rpm. In Fig. 4C, the slider was placed at a radius of 33 mm and the abrasive disk was rotated at 345 rpm. In all cases, surface treatment lasted 20 minutes. The data was obtained to determine the effect of disk texture on the surface mechanical treatment process. The CSS results were all very good, indicating that the slider ABS treatment is very effective regardless of the abrasive disk texture crossing angle. In each case, stiction remained below 7 grams, even after 5000 CSS cycles. In Fig. 4D, the slider was placed at a 23 mm radius, and the disk was rotated at 500 rpm for only 15 minutes. The CSS result was again very good, indicating that shorter times can be used to improve the productivity of the process. The stiction remained below 6 grams, even after 5000 cycles. Results shown in Figs. 3 and 4 indicate that the total treatment time is probably more important in slider surface treatment. It is thought that the fine particles (20 nm grains size) which constitute the sputtered ZrO₂-Y₂O₃ film act as fine abrasives to treat the slider surface.

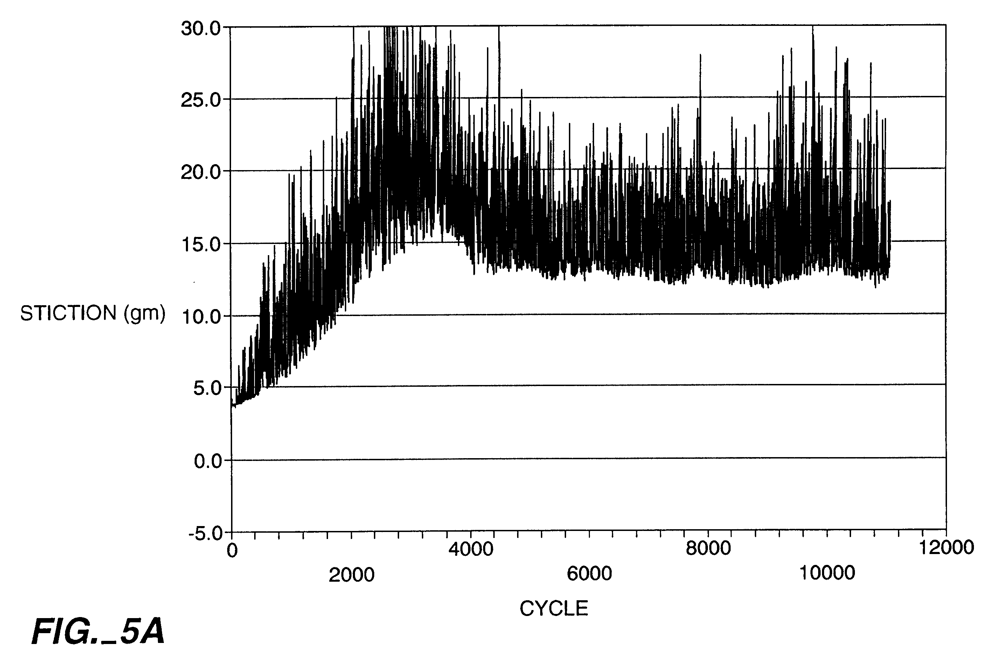

A similar treatment was tried with much larger particles, this time using alumina. In Fig. 5A, a Al₂O₃-TiC slider was stroked over a lapping plate which was covered with 0.1 µm alumina slurry particles affixed thereto for about one minute prior to CSS testing. After 3000 cycles, stiction increased to about 35 grams. Although the CSS results were still poor, some improvement can be seen over that of the prior art slider of Fig. 2. The increase in stiction is not nearly as rapid or large as the untreated slider of Fig. 2. Data for Fig. 5B to 5D are for Al₂O₃-TiC sliders which were treated by stroking over abrasive tapes comprising 1 µm alumina particles in a binder. In Fig. 5B, the slider was stroked over the tape for 1000 cycles with a stroke distance of 12.7 mm for a total travel of 12.7 m. In Figure 5C, the slider was stroked for 2000 cycles for a stroke distance of 12.7 mm and a total travel of 25.4 m. For Fig. 5D, the slider was stroked 4000 cycles with a stroke distance of 12.7 mm for a total travel of 50.8 m. In addition to the normal 11 gram suspension load, an additional 20 to 25 grams of load was applied directly on the slider during treatment. The CSS tests clearly indicate improvement with larger total travel distances by the sliders. For Fig. 5B, stiction remained at about 8 grams after 4700 cycles, for Fig. 5C, stiction rose to 7.5 grams after 11,000 cycles, and for Fig. 5D, stiction rose to 7 grams after 11,000 cycles. At a travel distance of 25.4 m, the CSS performance is comparable to those of sliders treated against a ZrO₂-Y₂O₃ coated disk for a much longer travel distance. It is believed that since 1 µm alumina particles are much larger and harder than the ZrO₂-Y₂O₃ particles, and since the experiment was carried out with a greater downward force on the slider during treatment, the total travel distance could be reduced during treatment using alumina.

In another embodiment, a disk composed of glass-ceramic material was used to treat an Al₂O₃-TiC slider to remove the damaged layer. Glass-ceramics is a class of material comprising a mixture of a crystalline phase and a glassy amorphous phase. In Fig. 12A, glass-ceramic material comprising canasite formed in the shape of a disk was used as the abrasive material to treat an Al₂O₃-TiC slider. (Canasite substrates are commercially available, e.g. Corning Code 9634 Chain Silicate Magnetic Disk Substrates produced by the Memory Products division of Corning Glass Works, Corning, N.Y. Canasite glass-ceramic material is described in U.S. Patent 4,386,162 and European Patent Application 0 384 574 A2, incorporated herein by reference.) The slider was rubbed on the canasite disk surface for a total of 718 m at 500 rpm and placed at a radius of 23 mm. During CSS testing, the slider exhibited performance that was significantly superior to prior art sliders, e.g. as shown in Fig. 2.

In Fig. 12B, another slider was treated using a canasite disk, rubbing the ABS at a radius of 25.4 mm. The CSS for this slider was alsa significantly improved.

One can fabricate glass-ceramic material using any of a variety of compositions and structures, as explained' in "Design and Properties of Glass-Ceramics" by G. H. Beall in Annual Review Material Science, pg. 91-119, Vol. 22, 1992, incorporated herein by reference. Crystalline materials other than canasite, e.g. as discussed in the Beall, '162 and '574 references, can also be used in a glass-ceramic in conjunction with our invention.

A key feature of glass-ceramics which is of interest in surface treatment of the slider ABS, is that they can be created so that the surface of the material has sharp crystalline features which protrude from the surface which act as abrasive "points" or contacts to mechanically remove the damaged layer from the ABS surface.

As described earlier, the size of the grains in a treatment surface comprising a crystalline film should be about the same as or smaller than the grain size of the ABS material. In the same way, the size of the crystalline protrusions or the sharp tips of the protruding crystalline material in the case of a glass-ceramic should be about the same as or smaller than the grain size of the ABS material.

To demonstrate, Fig. 13A is a SEM image of the surface of a disk sputtered with a 30 nm thick ZrO₂-Y₂O₃ film, such as the films used to treat the sliders of Figs. 3A to 3C and 4A to 4D. As shown in Fig. 13A, the grain size of the ZrO₂-Y₂O₃ is on the order of 20 nm. This film has a small surface roughness. Fig. 13B shows the SEM image of 1 µm Al₂O₃ tape used to treat the slider of Figs. 5B to 5D at a magnification of 10,000 X. Fig. 13B shows the actual grain size ranging from about 2 µm down to a tenth of a micron and having a sharp and relatively rougher surface than the ZrO₂-Y₂O₃ of Fig. 13A. Also see Fig. 13 B', which is an AFM image of the tape of Fig. 13B.

Fig. 13C is a SEM image of a canasite disk having grain size on the order of several microns or smaller. In Fig. 13C, it is difficult to discern the protrusion of the crystalline phase material. For this reason, the same disk surface is illustrated in an AFM image which delineates the presence of sharp protrusions (see Fig. 13C'). It is these protrusions which are effective in removing the damaged layer from the slider ABS.

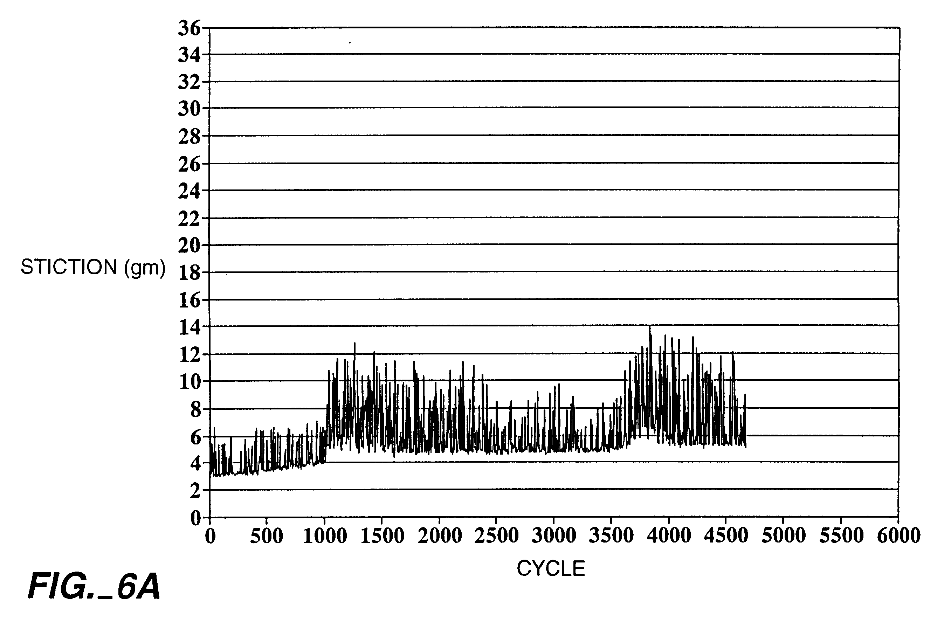

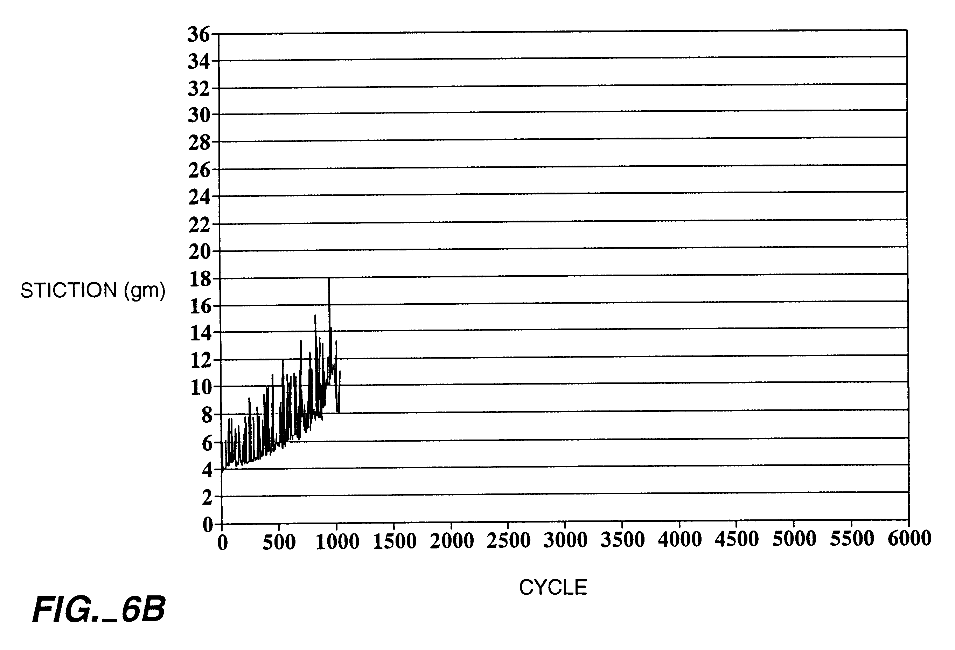

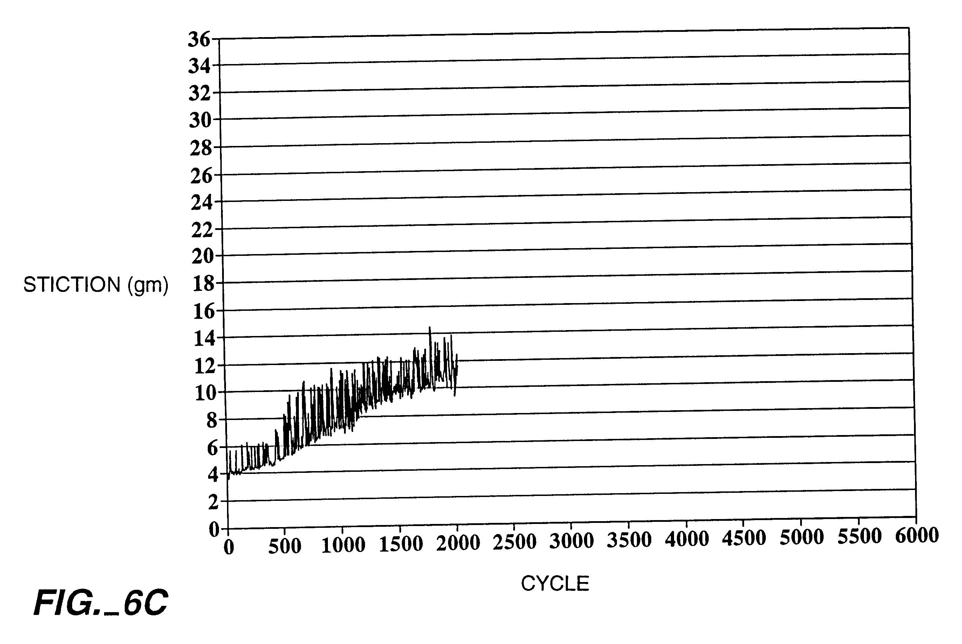

The excellent CSS results obtained with sliders subjected to surface treatment with a sputtered ZrO₂-Y₂O₃ film and alumina particles on a tape can be contrasted with sliders polished using fine diamond abrasives. In Fig. 6A, the slider was stroked over 0.5 µm diamond particles embedded on a tape for 100 cycles over a 12.7 mm stroke distance for a total travel distance of 1.27 m. It can be seen that CSS results show high stiction values and a large modulation, indicating that a wear process is occurring. Specifically, after 1000 CSS cycles, stiction rose to a value of 12 grams. As previously discussed, in order to produce a smoother surface, conventional wisdom has it that successively smaller particles are to be used. In Fig. 6B, 0.1 µm diamond particles embedded on a tape were used with a 12.7 mm stroke distance. The CSS test was terminated at 1000 cycles because the stiction was already rapidly increasing, and had reached a value of 18 grams. Conditions for Fig. 6C were the same as for Fig. 6B, except that during polishing, water and ethylene glycol were applied to the tape as a lubricant. It is generally believed that lubricants make cutting action of an abrasive more gentle. However, the CSS results were equally bad as for Fig. 6B, and the test was terminated after 2000 cycles. These CSS results indicate that even a very fine particle size diamond leaves a significant amount of damage at the slider surface. Thus, polishing to a smooth surface with diamond particle abrasives is not sufficient to improve CSS performance. Further, a very smooth surface on the ABS is not necessarily advantageous since it leads to larger contact surface between the ABS and the disk surface.

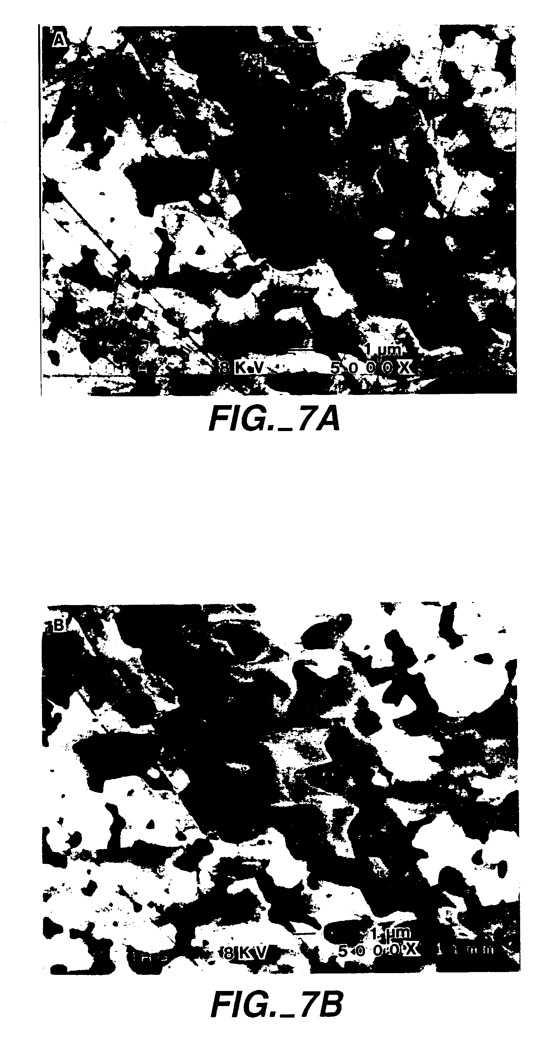

Some evidence of the presence of surface damage on the slider ABS is observed by SEM analysis. Fig. 7A is an SEM micrograph of an ABS prepared by conventional techniques using a diamond abrasive. The image was obtained in a secondary electron imaging mode. The SEM for Fig. 7A was operated at 8 KV with a magnification of 5000X. In the secondary electron imaging mode at 8 KV, the contrast in the image came mostly from the surface of the slider material. Dark areas are the TiC phase. Numerous dark and fine lines are observed in the Al₂O₃ phase, which are presumably the lapping marks left by the diamond particle abrasives. Fig. 7B is an SEM image obtained from exactly the same area on the slider surface after surface treatment with a ZrO₂-Y₂O₃ film. It can be seen that considerably fewer lines are seen in Fig. 7B over the Al₂O₃ phase, suggesting that a good fraction of the surface damage has been removed.

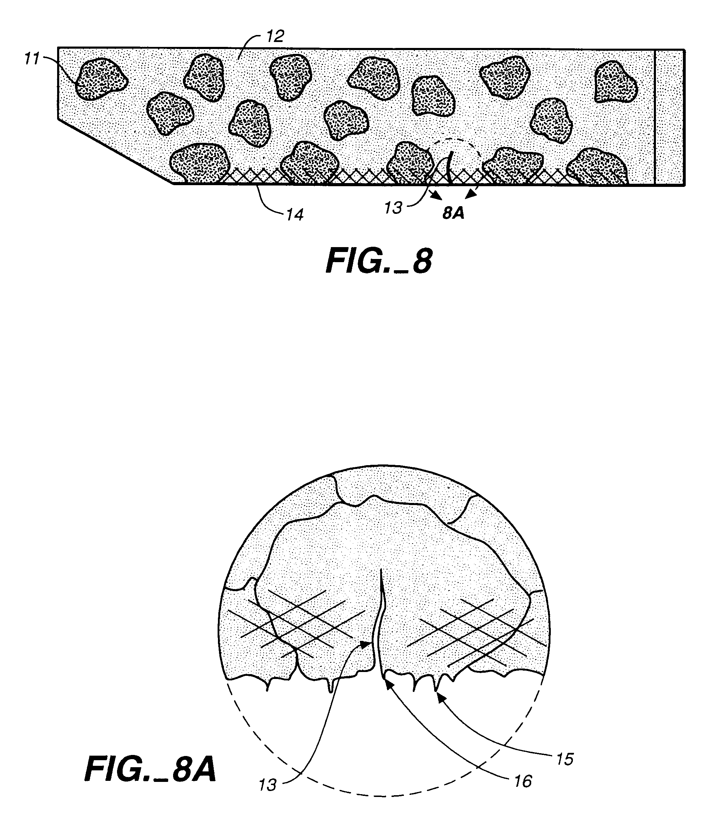

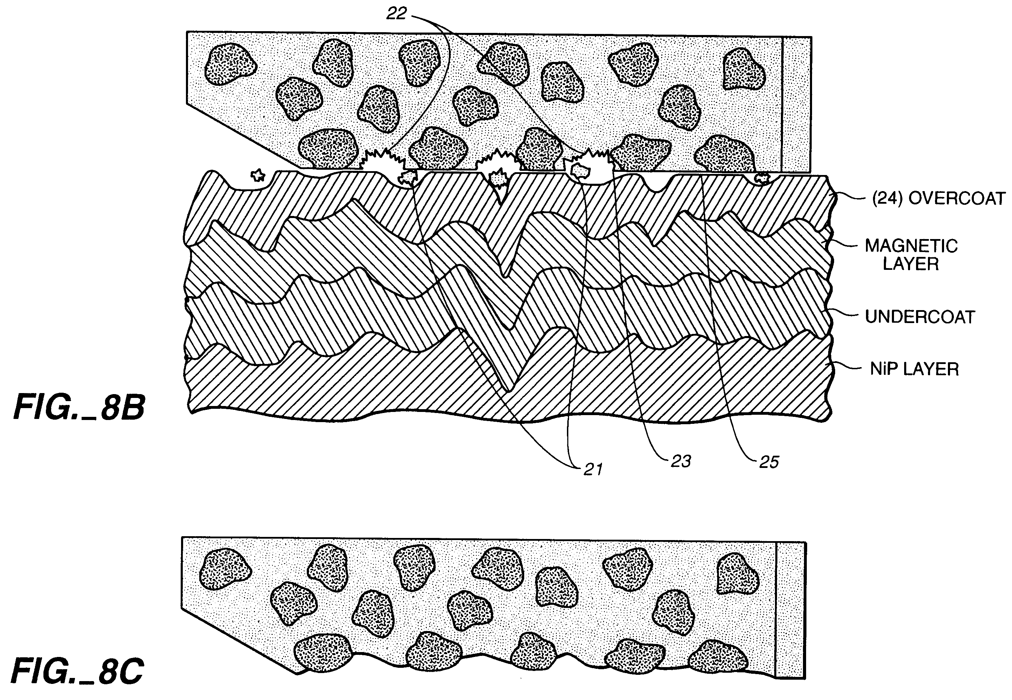

The sub-surface damage expected from diamond polishing is illustrated schematically in cross section in Figs. 8 and 8A. (It should be noted that Figs. 8 and 8A to 8C are schematic and not to scale, and the features shown therein are exaggerated.) In Fig. 8, the TiC crystals are indicated in the generally circular island regions 11, and the Al₂O₃ is indicated at 12. A typical volume fraction of Al₂O₃ in an Al₂O₃-TiC slider is 70%. A microfracture 13 and crystal damage 14 are indicated by areas with double cross-hatching. Damage 14 can produce sharp asperities 15 in damaged area 14, as well as sharp corners 16 near where microfracture 13 occurred. The phenomenon which is believed to cause the friction problem is further illustrated in Fig. 8B, where particles 21 were dislodged from the damaged areas 14, leaving behind holes 22 which may have sharp corners 23. Particles 21 become entrapped at the disk/ABS interface, contributing to abrasive wear of overcoat 24, which creates regions of flat spots 25, which lead to higher stiction. The combination of entrapped particles 21, sharp corners 23 around holes 22 left in the ABS, and sharp asperities 15 at the damaged ABS surface cause accelerated abrasive action which can wear away carbon overcoat 24. The result of the slider ABS treatment is shown in Fig. 8C, where portions of sub-surface damaged areas have been preferentially removed, leaving behind a rougher surface. Sharp asperities 15 and sharp corners 23 around holes 22 left behind by the dislodged particles 21 have been smoothed out. Since the TiC phase is harder than the Al₂O₃ phase, it is thought that the TiC phase protrudes somewhat from the slider surface, although the TiC phase is also removed by the surface mechanical treatment operation.

The evidence of the above-described process is shown in an atomic force microscope (AFM) image of the slider ABS before and after surface mechanical treatment in Figs. 9A and 9B. The AFM was manufactured by Digital Instruments of Santa Barbara, California, and is commercially known as model AFM NanoScope II. Fig. 9A is an AFM image of a slider ABS after normal diamond lapping. The surface can be seen as very smooth, with a surface RMS roughness Ra of 1.3 nm. Fig. 9B is an AFM image of a slider which was finished by sliding over a sputtered ZrO₂-Y₂O₃ film for 20 minutes at 500 rpm, a radius of 23 mm, and a normal loading force of 11 grams. It can be seen that many random scratches have been largely removed, and the surface has become much rougher. In fact, the RMS Ra has increased to 2.9 nm. Thus, the surface treatment described herein has led to the creation of a very fine micro-texture over the ABS. Since a smoother slider surface in fact actually leads to very poor CSS performance, it appears that diamond particle abrasives are much too hard for the Al₂O₃-TiC material. Sub-surface damage left behind, even by particles as small as 0.1 µm, is sufficient to cause significant problems in the CSS performance.

Of significant importance is the effect of surface polishing and treatment on the ABS geometry. Table I lists starting and ending values of the crown, camber and twist for sliders which were conditioned using sputtered ZrO₂-Y₂O₃ and alumina particles, and for sliders polished using various sizes of diamond particle abrasives. It can be seen that after 1445 m of sliding on the ZrO₂-Y₂O₃ film, the crown has decreased by only about 9.6 nm, which indicates that some high point on the ABS has been cut down. For the case of 1 µm alumina, 12.7 m of total stroke distance did not change the slider geometry significantly. The diamond particle abrasives on the other hand were found to be extremely aggressive. Even the 1.27 m of total stroke distance for the 0.1 µm diamond particle abrasives removed large amounts of material and significantly altered the surface geometry of the ABS. This again points out that diamond, having a much higher hardness, is extremely aggressive and only results in a polishing of the surface, not a selective removal of damaged material. In fact, it may continue to create more damage which is why the resulting head shows much less improvement in CSS and is unsuitable for the purpose of surface treatment to improve CSS performance of Al₂O₃-TiC. This is clearly illustrated by the fact that even with 1445 m of total sliding distance over a ZrO₂-Y₂O₃ film, the changes in the ABS geometry are still smaller than the changes seen in a slider subjected to a stroke distance of only 1.27 m over diamond particle abrasives.

In order to create a micro-texture on the ABS according to this invention, some surface damage should be incurred by diamond lapping. This is a significant advantage, since the slider ABS does not have to be polished to a very fine smoothness in multiple steps. Fewer steps with larger particles can be used to quickly shape the slider geometry. Since fewer steps are involved, the ABS geometry of parts produced will have' a tighter distribution and better quality. The damaged layer, which is inevitably left on the surface, can then be selectively removed, leaving behind a micro-textured surface with minimal changes to the previously defined ABS geometry. The size and depth of the micro-texture should be adjustable through proper selection of diamond particle abrasives, the size and type of grains present in the slider material, and the treatment condition.

In one embodiment, the lapping plate is made from a Sn-Sb plate which is 97.5% Sn by weight and 2.5% Sb by weight. The diamond-slurry includes 70% water and 30% ethylene glycol, using diamond particles having a size of 0.5 to 3 µm embedded in the lapping plate. A loading force of 10 to 30 grams may be used in addition to the suspension load. The suspension load may be from 3 to 15 grams.

In the mechanical treatment, it is preferable that the abrasive particles used for surface treatment be of a comparable or more preferably somewhat lower hardness than that of the slider material, or softer than the softest phase in the case of composite slider material. This is because in ceramic materials, damaged regions with microfractures and highly plastically deformed regions can be mechanically attacked with particles with similar or even lower hardness. The particles should not be very much harder than the slider material, since only the damaged material should be removed. If the abrasive particles are too hard, ABS material would be continuously damaged. Since Al₂O₃-TiC is a dual phase material, defining and measuring the hardness of the composite is somewhat difficult. For example, pure TiC has a Knoop hardness of 2470 and Al₂O₃ has a Knoop hardness of 2100 as shown in the CRC Handbook of Chemistry and Physics, published by the CRC Press, Inc. in 1988. Since the properties of the abrasive particles are not precisely known either, and it is equally difficult to measure their hardness, the general principle to follow is that theoretical hardness (i.e. bulk hardness) of the treatment abrasive particles should preferably have an upper hardness limit of about 20% harder than the theoretical Knoop hardness of the harder phase of the slider material. The abrasive particles may be as soft as 25% to 50% of the hardness of the softer phase. If the abrasive particles are softer than that, the mechanical treatment may take a long time. It is noted that the ZrO₂ used in one embodiment of our invention is 1160 on the Knoop scale, which is about 55% of the Al₂O₃ hardness. The canasite, which is used in another embodiment, is 650 on the Knoop scale.

Another consideration in the case of dual phase material is the relative grain size of each phase. Since the abrasive particles must act on individual grains of the phase, the size of the abrasive particles (or abrasive grains in the case of a continuous abrasive film) should be preferably similar to or smaller than the grain sizes of the two phases.

One important consideration for the choice of abrasive material is that during the slider surface treatment, pole tip 9 should remain as close to flush with respect to slider surface 7 as possible. The pole material is generally much softer than the slider material, and becomes recessed with respect to slider surface 7 by the diamond lapping process. Any recession of the pole tip contributes to affecting a larger separation between the head and the magnetic media, and is therefore undesirable. A pole tip recession of between .005 to .025 µm is typical. If the abrasive particle or grain size is too large or too hard, it is possible that the pole tip can be undesirably abraded, leading to a larger pole tip recession.

It should be noted that a larger or harder abrasive particle or grain will enable one to perform surface treatment more rapidly and therefore less expensively. A larger or harder particle or grain will also permit a deeper texture to be formed on the ABS. Thus, there is an engineering tradeoff between speed and texture depth on the one hand, and pole tip recession on the other hand. Therefore, one can modify grain or particle size and hardness, depending on which of these issues (pole tip recession, process speed or texture depth) is of greater concern.

When practicing the invention using a glass-ceramic abrasive, it is desirable to use crystalline material having a substantially equiaxial shape. This will ensure that come crystallites do not extend at random locations an excessive distance above the glass-ceramic disk to abrade the pole tip, thereby increasing the effective flying height.

In accordance with our invention, a variety of methods can be used to achieve surface treatment of an ABS. Fig. 10 schematically represents a machine for providing surface treatment to a slider ABS. A set of sliders 31 to be polished is supported and held in place over the surface of an abrasive disk by suspension assembly 32 which is part of the slider gimbal assembly. The downward force exerted may range from about 3 to 15 grams, as provided by the specific suspension design. The load can be increased beyond what the suspension provides by directly applying more load to sliders 31. Multiple sliders 31 are loaded to increase throughput. Abrasive disk 33 is then rotated in a direction of arrow A using a suitable drive motor with rotation speed lower than the take off speed of sliders 31, and preferably less than one half of the take off speed of the slider design to ensure the effective rubbing of the ABS.

The disk can be coated with abrasive particles by a variety of methods. For example, ZrO₂-Y₂O₃ particles can be applied by vacuum deposition, such as sputtering. Particle size of the ZrO₂-Y₂O₃ film can be adjusted by deposition conditions such as the substrate temperature, sputter pressure and film thickness. In one embodiment, sputtering is accomplished at a pressure of 6 milli-torr of argon, using a substrate at room temperature and a power density of about 3W/cm². Grain sizes up to 1 µm can be grown by a combination of film thickness and deposition temperatures. Other deposition techniques include plasma spraying, chemical vapor deposition ("CVD") and reactive ion beam deposition.

Alternative abrasive materials include hydrogen doped carbon as disclosed in U.S. Patent 5,045,165, incorporated herein by reference, and European Patent Application 0 440 259 A2, published August 7, 1991, also incorporated herein by reference. Additionally, the hydrogen doped carbon can be formed by the plasma CVD technique discussed by Ishikawa et al., in "Dual Carbon, a New Surface Protective Film for Thin Film Hard Disks", published in IEEE Transactions on Magnetics, September 1986, pages 999-1001, incorporated herein by reference. Also see U.S. Patent 4,804,590, issued to Nakamura et al. on February 14, 1989, incorporated herein by reference.

As an alternative to sputtering ZrO₂-Y₂O₃ onto disk 33 in Fig. 10., particles of this composition may be bonded to the disk using a binder. In one embodiment, these particles have a diameter less than about 2 µm. Another abrasive disk material can be a sintered disk made from ZrO₂-Y₂O₃ material.

A further alternative abrasive material which may be used in treating the slider ABS comprises one or more oxides selected from the group consisting of the oxide of Be, Si, Ti, V, Cr, Ni, Zn, Y, Nb, Mo, In, Sn, Hf, Ta and W.

A further alternative abrasive material which may be used in treating the slider ABS comprises one or more nitride materials selected from the group consisting of the nitrides of B, Al, Si and Ti. Borides such as AlB and ZrB₂ can also be used. A further alternative abrasive material which may be used in treating the slider ABS comprises carbides selected from the group consisting of the carbides of Be, B, Si, Ti, Zr, Ta and W.

The above mentioned oxides, borides, carbides and nitrides can be applied to abrasive disk 33 by sputtering or other vacuum deposition techniques, by using a binder such as epoxy, or other appropriate techniques.

Alternative methods for providing the treatment to remove damaged material from the slider include using a slurry of abrasive particles such as alumina or zirconia with a diameter in the range of about 2 µm or smaller. An alternative treatment technique involves using a abrasive tape, this being illustrated and described in connection with Fig. 11. Referring to Fig. 11, an abrasive tape 35 which includes on its surface abrasive coating which may be, for example Al₂O₃. The preferred particle size can be in the range of 0.1 to 2 µm. The abrasive material for tape 35 can alternatively be zirconia with a particle size in the range of 0.1 to 2 µm. In addition to using alumina as the abrasive coating, alternative abrasive coatings for tape 35 include metal oxides, carbides, nitrides and borides as described above in connection with abrasive disk 33 in Fig. 10. These metal oxides, carbides, nitrides and borides typically have a particle size less than about 2 µm. In this embodiment, the particles are bonded to the tape using a binder, such as an epoxy binder.

Instead of using Al₂O₃-TiC sliders, the present invention can be practiced using sliders made of other materials, including oxides, borides, carbides or nitrides of sufficient hardness.

In the polishing system illustrated in Fig. 11, slider 37 is supported by its own suspension 38 which supplies a downward force between slider 37 and abrasive tape 35 of about 3 to 15 grams. Commercially available abrasive tapes such as Mipox, manufactured by Nihon Micro Coating Co., Ltd., Tokyo, Japan may be utilized. Treatment with tape 35 may be performed by using a forward and backward motion as indicated by arrow 39. Alternately, a sideways stroke motion can be used, or the slider can be held stationary and the tape made to move past the slider.

When using the present invention, debris (e.g. damaged slider material) may be deposited on the abrasive surface used to provide the surface treatment. In one embodiment, it may be desirable to remove this debris. This can be accomplished, e.g. using a polisher such as that manufactured by Speedfam Corporation of Chandler, AZ, using a nylon or polymeric polishing pad and a conventional slurry, e.g. using SiC or Al₂O₃ polishing particles. A texture machine, e.g. such as manufactured by R. Howard Strasbaugh, Inc. of Huntington Beach, CA can also be used for this purpose. Such a debris-removal technique is particularly effective when used in conjunction with a glass-ceramic, e.g. a silicate glass containing canasite. Because of this, such a glass-ceramic can easily be reused, and thus it is relatively inexpensive to manufacture sliders.

In the case of floppy disk and tape heads, the flexible media always contacts the slider surface. The same principles defined for a hard disk slider can be used to improve the surface properties of the head to reduce friction through removal of mechanically weak damaged material from the contact surface of the recording head, and the reduction of the contact surface by creating a micro-texture.

The foregoing description of our invention is merely illustrative, and those skilled in the art will appreciate, in light of the present disclosure, that variations and modifications may be made without departing from the spirit and scope of the present invention. For example, instead of using diamond particles to cause damaged regions in the slider, other suitably hard abrasives may be used, e.g. having a hardness greater than 5000 on the Knoop scale. In addition, the surface mechanical treatment can be performed by abrading a slider surface against a disk, tape or other abrasive covered with a lubricant. The lubricant may have a kinematic viscosity less than about 50 centistokes. The lubricant may be one of or a mixture of mineral oil, glycol, alcohol, water, silicone oil, or perfluoropolyether having a molecular weight less than about 1000.

Annexed hereto are copies of US Patent Applications 07/933 431 filed 19 August 1992 &07/957 535 filed 05 October 1992 the contents of which are incorporated herein by reference.

Also incorporated herein by reference are the contents of European Application filed on 19 August 1993 under references M-2438 EP &PL 76445 with claims to priority from US Patent Applications 07/933 431 filed 19 August 1992, 07/957 535 filed 05 October 1992 &08/080 339 filed 21 June 1993.

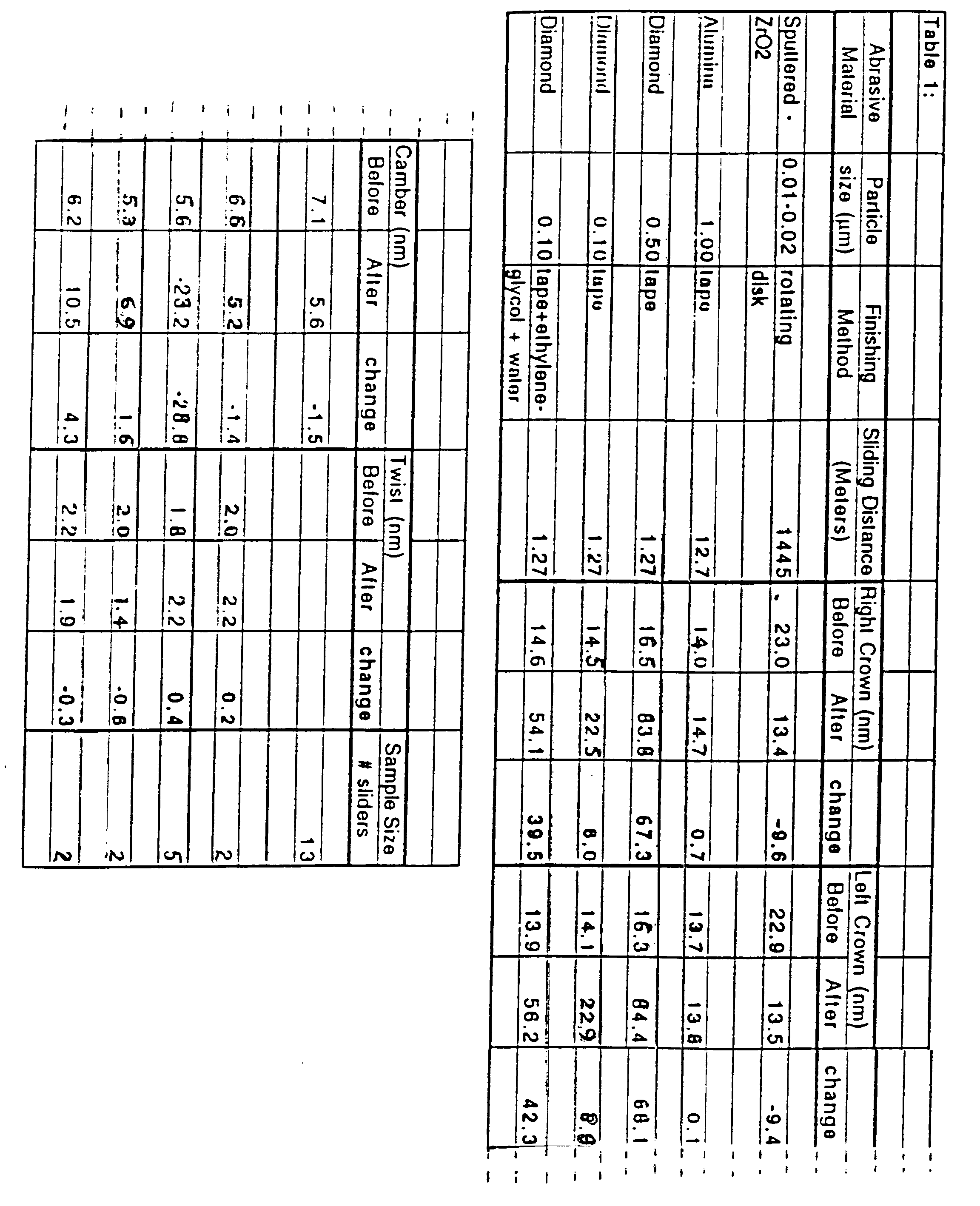

## Claims

1. A method of manufacturing a magnetic recording head slider including a surface having damaged material therein, method comprising the step of abrasively preferentially removing the damaged material at the surface while leaving the undamaged material at the surface substantially intact, thereby resulting in a slider exhibiting reduced friction and stiction and having a micro-texture.

2. A method according to claim 1, wherein the slider comprises Al₂O₃-TiC.

3. A method according to claim 2, wherein the step of abrasively preferentially removing comprises abrading the slider against a material having a Knoop hardness less than about 3000.

4. A method according to claim 2 or 3 comprising the step of lapping the slider using abrasive particles having a Knoop hardness greater than 5000.

5. A method according to claim 1, 2 or 3, comprising the step of lapping the slider using diamond particles having an average size of about 0.1 µm or greater, the particles introducing non-uniform damage on the surface of the slider.

6. A method according to preceding claim, wherein the step of abrasively removing preferentially removes said damaged material and surface asperities and sharp corners around the grains of the slider.

7. A method according to any preceding claim, wherein the step of abrasively removing comprises abrading the slider against a material having a hardness within the range of about plus 20% and minus 50% of the slider Knoop hardness.

8. A method according to any preceding claim, wherein the micro-texture has a roughness Ra between about 1.0 to 3.0 nm.

9. A method according to any one of claims 1 to 7, wherein the micro-texture has a roughness Ra between 3.0 to 5.0 nm.

10. A method according to any preceding claim, wherein the step of abrasively preferentially removing comprises abrading said slider material against abrasive particles having a grain size approximately equal to or smaller than the grains of the slider material.

11. A method according to any preceding claim, wherein the step of abrasively preferentially removing increases by at least about a factor of about two the number of CSS cycles that said slider can undergo without exceeding a stiction coefficient of one.

12. A method according to any one of claims 1 to 10, wherein the step of abrasively preferentially removing increases by at least about a factor of five the number of CSS cycles that the slider can undergo without exceeding a stiction coefficient of one.

13. A method according to any preceding claim, wherein the slider comprises a material selected from the group consisting of CaTiO₃, MnZn, NiZn ferrite and yttria stabilised zirconia.

14. A method according to any preceding claim, wherein the slider comprises a carbide, oxide or nitride having a Knoop hardness greater than 1000.

15. A method according to any preceding claim, wherein the step of abrasively preferentially removing comprises abrading the slider against a glass-ceramic material.

16. A method according to claim 15, wherein the glass-ceramic material comprises canasite.

17. A method according to claim 15, wherein the glass-ceramic material has a glass phase and a ceramic phase, the ceramic phase being harder than the glass phase, wherein, during the step of abrasively preferentially removing, the glass phase wears more rapidly than the ceramic phase, and wherein the ceramic phase extends into the slider material to effectively remove the damaged material from the slider and texture the slider.

18. A method according to any preceding claim, wherein the damaged material is damaged by abrading the surface against diamond.

19. A method according to any preceding claim, wherein the damaged material is damaged by abrading the surface against a material having a Knoop hardness greater than 5000.

20. A method according to any preceding claim, wherein the step of abrasively preferentially removing makes the slider rougher.

21. A method according to any preceding claim, wherein the slider comprises a matrix including a plurality of phases of different hardnesses.

22. A method according to any preceding claim, wherein the step of abrasively preferentially removing is accomplished while substantially avoiding further damage to the slider.

23. A method of treating the surface of a slider by abrading the slider against a fixed abrasive comprising one or more oxides of an element selected from the group consisting of Al, Zr, Be, Si, Ti, V, Cr, Ni, Zn, Y, Nb, Mo, In, Sn, Hf, Ta and W.

24. A method according to claim 23, wherein the one or more oxides particles having a size less than about 2 µm bonded to a tape.

25. A method according to claim 23, wherein the one or more oxides comprise particles having a size less than about 2 µm bonded to a disk with a binder.

26. A method according to claim 23, wherein the one or more oxides are vacuum-deposited on a substrate.

27. A method according to claim 23, 24, 25 or 26, wherein a lubricant with a kinematic viscosity less than about 50 centistokes is applied to the one or more oxides.

28. A method according to claim 27, wherein the lubricant is selected from mineral oil, alcohol, glycol, water, silicone oil and a perfluoropolyether having a molecular weight less than 1000.

29. A method of surface treating a slider comprising the step of abrading the slider against a fixed abrasive comprising one or more carbides of an element selected from the group of elements consisting of Be, B, Si, Ti, Zr, Ta and W.

30. A method of surface treating a slider comprising the step of abrading said slider against a fixed abrasive comprising one or more nitrides of an element selected from the group of elements consisting of B, Al, Si and Ti.

31. A method of surface treating a slider comprising the step of abrading the slider against a sputtered hydrogenated carbon film.

32. A method according to claim 31, wherein the hydrogenated carbon film is formed by sputtering carbon onto a substrate in the presence of a gas containing hydrogen.

33. A method according to claim 31, wherein the hydrogenated carbon film is formed by plasma decomposition of a hydrocarbon gas.

34. A method of manufacturing a slider comprising the steps of:
lapping the slider using an abrasive having a Knoop hardness greater than about 5000; and
thereafter rubbing the slider against a surface made of a material having a Knoop hardness less than an amount about 20% greater than the Knoop hardness of said slider.

35. A method of manufacturing a slider comprising the steps of:
lapping the slider using an abrasive having a Knoop hardness greater than about 5000; and
thereafter rubbing the slider against a surface made of a material having a Knoop hardness less than bout 3000.

36. A method of manufacturing a magnetic recording head slider including a surface portion having at least some damaged material which is relatively easily removed from the surface portion and at least some damaged material which is relatively not easily removed from the surface portion, the method comprising the step of abrasively substantially removing the damaged material which is relatively easily removed from the surface portion while substantially leaving the damaged material which is relatively not easily removed from the surface portion, thereby resulting in a slider exhibiting reduced friction and stiction and having a micro-texture.

37. A method of manufacturing a magnetic recording head slider, the method including the step of polishing or abrading a surface of the slider, the slider comprising a mixture of relatively soft material and relatively hard material which are each damaged at least in part by the polishing or abrading process, the method including an additional step comprising:
substantially removing from the slider the damaged relatively soft material by mechanical treatment while leaving at least a portion of the damaged relatively hard material on the slider, so as to substantially reduce the overall amount of material which dislodges from the slider during use and thereby reduce friction, and to simultaneously create a micro-texture on a surface of the slider to thereby reduce stiction.

38. A method according to claim 36 or 37, wherein the step of substantially removing is accomplished using fixed abrasives.

39. A method according to claim 38, wherein the fixed abrasive has a Knoop hardness less than a first value and greater than a second value, the first value being 20% greater than the Knoop hardness of the hardest phase material in the slider, and the second value being 25% of the Knoop value of the softest phase material in the slider.

40. A method according to claim 36, 37, 38 or 39 wherein the resulting micro-texture of the slider has an Ra great than 2 nm as measured by an atomic force microscope.

41. A method according to any preceding claim wherein the surface of the slider is of a non-magnetic material.

42. A slider manufactured or treated by the method of any one of the preceding claims.
